# EUROPÄISCHE PATENTSCHRIFT

(11) **EP 3 314 203 B1**
(45) Veröffentlichungstag und Bekanntmachung des Hinweises auf die Patenterteilung: **07.08.2019**
(21) Anmeldenummer: 16731897.1
(22) Anmeldetag: 23.06.2016
(51) Int. Cl.: G01B 21/04, B23Q 3/10, G01B 5/00, G01B 5/008, G01B 5/012, G01B 7/008, G01B 11/00

(54) **ADAPTERELEMENT ZUR MONTAGE EINER DREHVORRICHTUNG IM MESSRAUM EINES KOORDINATENMESSGERÄTS**
ADAPTER ELEMENT FOR ASSEMBLING A ROTATIONAL APPARATUS IN THE MEASUREMENT SPACE OF A COORDINATE MEASURING MACHINE
ÉLÉMENT ADAPTEUR POUR LE MONTAGE D'UN DISPOSITIF ROTATIF DANS LA CHAMBRE DE MESURE D'UN APPAREIL DE MESURE DE COORDONNÉES

(30) Priorität: 26.06.2015 DE 102015211951
(43) Veröffentlichungstag der Anmeldung: 02.05.2018
(73) Patentinhaber: Carl Zeiss Industrielle Messtechnik GmbH, 73447 Oberkochen (DE)
(72) Erfinder: SAGEMÜLLER, Rainer, 73434 Aalen (DE)
(74) Vertreter: Patentanwälte Bressel und Partner mbB
(86) Internationale Anmeldenummer: PCT/EP2016/064585
(87) Internationale Veröffentlichungsnummer: WO 2016/207303

(56) Entgegenhaltungen:
- WO-A1-2013/156074
- DE-A1- 10 159 442
- US-A- 4 369 581
- US-A- 5 410 817
- US-A1- 2014 331 510

## Beschreibung

Die vorliegende Erfindung betrifft ein Adapterelement zur Montage einer Drehvorrichtung im Messraum eines Koordinatenmessgeräts, eine Anordnung, aufweisend dieses Adapterelement, ein Koordinatenmessgerät, aufweisend das Adapterelement oder die Anordnung sowie ein Verfahren zur Bestimmung der Lage einer Drehachse in einem Koordinatenmessgerät.

Koordinatenmessgeräte (nachfolgend KMG) sind vielfach mit einem Drehtisch ausgestattet. Der Einsatz eines Drehtisches bringt anwendungstechnische Vorteile mit sich. Wird beispielsweise mit einem Drehtisch die Form eines Werkstücks vermessen, kann ein KMG-Portal ortsfest bleiben. Dadurch ergeben sich Genauigkeitsvorteile bei der (Form)-Messung, da die Bewegungsfehler des KMG nicht in die Messung eingehen. Häufig sind auch Zugänglichkeitsprobleme ein Grund für den Einsatz eines Drehtisches, z.B. bei innenliegenden Hinterschnitten, die nicht mit einem seitlich auskragenden Taster, der an einem KMG-Portal befestigt ist, scannend angetastet werden können.

Viele Kunden wollen nun neben der Form eines Werkstücks auch dessen Durchmesser erfassen. Dabei besteht folgendes Problem:
Die z.B. von einem Taster erfassten Werkstückkoordinaten entstehen im KMG-Koordinatensystem. Das Werkstück befindet sich auf dem Drehtisch. Da die dimensionellen Maße eines Werkstücks im Werkstückkoordinatensystem angegeben werden müssen, werden die erfassten Werkstückkoordinaten in das Werkstückkoordinatensystem transformiert. Für die Transformation muss die genaue Position und Orientierung (Pose) der Drehtischachse im KMG-Koordinatensystem bekannt sein.

Leider ist die Pose der Drehtischachse über die Zeit nicht konstant, da z.B. der Nullpunkt des KMG aufgrund von Temperaturschwankungen oder Eigenerwärmung driftet. Dieses Problem wird als "Nullpunktsdrift" bezeichnet. Eine weitere mögliche Fehlerquelle, neben vielen weiteren, ist eine Veränderung des Tastervektors, z.B. ebenfalls aufgrund von Temperaturschwankungen.

Speziell bei der Bestimmung von Durchmessern durch Drehtischscanning gilt, dass sich jeder Drift (in Messrichtung) mit dem doppelten Betrag im Durchmesserergebnis auswirkt. Durchmesser lassen sich aus diesem Grund meist besser durch Scanning mit dem KMG-Portal bestimmen. Anwender haben hierfür in der Regel kein Verständnis, da sich auch die Messzeit entsprechend verlängert bzw. die Messaufgabe aufgrund von Zugänglichkeitsproblemen nicht lösbar ist.

Zur Bestimmung bzw. Korrektur der an einem KMG vorhandenen Drifts existiert eine Vielzahl Verfahren. Dabei können alle an einem KMG auftretenden (Temperatur)-Drifts (z.B. Nullpunktsdrift, Veränderung der Tastergeometrie oder Verformung des Messtisches) zu einem Gesamt-Drift zusammengefasst werden.
- Stand der Technik ist beispielsweise die zyklisch Vermessung eines auf dem Messtisch angeordneten Fixpunktes (Kugel). Allerdings ist dieses Verfahren relativ ungenau.
- Der in Anmeldung DE 20 12 027 533 beschriebene Vorschlag geht davon aus, dass die Nullpunktsdrift über zwei speziell angeordnete Artefakte ermittelt wird, die zyklisch gemessen werden. Dabei ist jedes Artefakt für den Drift in einer Raumrichtung ausschlaggebend.
- Vielfach wird auch empfohlen, anstatt einer Driftmessung die Drehtischachse vor jeder Werkstücks-Messung neu zu bestimmen. Aus Messzeitgründen und Zugänglichkeitsgründen (gegebenenfalls müsste der Drehtisch zur Einmessung der Drehtischachse zunächst entladen werden) ist dies nicht erwünscht.

Die Druckschrift US 5 410 817 A beschreibt ein Messwerkzeug, aufweisend:
Mittel zur Kopplung des Messwerkzeugs an eine Maschine; eine selektiv rotierbare Taststifthalterung, welche an einem Teil einer Basis eine axiale Bohrung und einen verzweigten Armabschnitt, welcher sich vom Teil der Basis aus erstreckt, aufweist; einen Schaft, welcher sich zwischen Taststifthalterung und besagtem Mittel zur Kopplung des Messwerkzeugs und der Maschine erstreckt und entlang einer zentralen Achse angeordnet ist; und einen im wesentlichen linearer Taststift, welcher sich vom Taststifthalter in einem Winkel von 45° relativ zur zentralen Achse erstreckt, wobei besagter Taststift selektierbar einstellbar entlang dem besagten 45° Winkel ist und absetzbar ist, sodass dieser auf der zentralen Achse endet, sodass ein Kontaktpunkt zur Kontaktierung des Werkstücks konzentrisch auf die zentrale Achse fällt.

Die Druckschrift US 2014/331510 A1 beschreibt eine Messmethode zur Bestimmung eines Referenzpunktes auf einer Tischmitte eines schräg rotierenden Tisches einer Drahterodiermaschine unter Verwendung einer Messvorrichtung.

Die WO 2013/156074 offenbart eine Adapterplatte zur Montage eines Objekts auf einem Messtisch eines Koordinatenmessgeräts oder an einer Aufspannfläche einer Werkzeugmaschine, wobei die Adapterplatte dazu eingerichtet ist, dass ein Objekt an einer Befestigungsseite der Adapterplatte mit einer oder mehreren Auflageflächen aufliegt und mit einer oder mehreren Befestigungseinrichtungen befestigt wird, und wobei die Adapterplatte ferner dazu eingerichtet ist über eine oder mehrere Spanneinrichtungen an dem Messtisch eines Koordinatenmessgeräts oder an der Aufspannfläche einer Werkzeugmaschine festgespannt zu werden, wobei an der der Befestigungsseite gegenüberliegenden Gegenseite der Adapterplatte ein oder mehrere Vorsprünge vorgesehen sind, wobei der oder die Vorsprünge dazu vorgesehen ist/sind sich mit seinem/ihrem der Adapterplatte abgewandten Ende gegen den Messtisch oder gegen die Aufspannfläche abzustützen, wobei der oder die Vorsprünge im Wesentlichen in Bereichen angeordnet sind, die der besagten Auflagefläche oder den besagten Auflageflächen gegenüberliegen und die besagte Spanneinrichtung oder die besagten Spanneinrichtungen vorgesehen ist/sind, um die Adapterplatte in Richtung des Messtisches oder der Aufspannfläche zu spannen.

Die US 4 369 581 A zeigt ein Verfahren zur Bestimmung der Drehachse eines Rundtisches in mit mindestens einem Taster ausgestatteten Mehrkoordinaten-Messgeräten, umfassend folgende Schritte
a) Anordnen einer räumlichen Antastfläche exzentrisch zur Drehachse des Rundtisches;
b) Bestimmen der Position eines Punktes, welcher mit der Antastfläche assoziiert ist, im Koordinatensystem des Mehrkoordinaten-Messgerätes durch Antasten der Antastfläche mit dem Taster;
c) Wiederholung der Bestimmung der Position des besagten Punktes in mindestens zwei weiteren Winkelstellungen des Rundtisches;
d) Bestimmung der Normaleinrichtung auf einer Ebene, welche die in den mindestens drei Winkelstellungen des Rundtisches ermittelten Punkte enthält;
e) Bestimmung des Mittelpunkts eines durch die mindestens drei Punkte gelegten Kreises, wobei die Rotationsachse des Drehtisches die Normale ist, welche durch den Mittelpunkt des Kreises geht.

Die DE 10159442 zeigt einen Kalibrierkörper für Koordinatenmessgeräte, wobei Kugeln mittels Abstandselementen zu ein-, zwei- oder dreidimensionalen Kalibriernormalien fest miteinander verbunden sind, wobei die Mittelpunkte der Kugeln vorgegebene Kalibrierwerte bilden, die aus Umfangsvemessungen der Kugeln berechenbar sind.

Allgemein weisen die bekannten Verfahren den Nachteil einer langen Messzeit, ungenügender Genauigkeit und einen hohen Setup-Aufwand bzw. Platzbedarf auf dem Messtisch auf.

Neben den oben beschriebenen Problemen im Zusammenhang mit der Bestimmung von dimensionellen Maßen (Durchmesser) durch Drehtischscanning existieren weitere Probleme beim Einsatz eines Gegenhalters.

Gegenhalter sind bei langen schlanken Werkstücken erforderlich, z.B. bei Lenkspindeln oder Kurbelwellen. Kommt ein Gegenhalter zum Einsatz, wird das Werkstück üblicherweise zwischen einer genau zentrierten feststehenden Spitze auf dem Drehtisch und einer gegenüberliegenden mitlaufenden Spitze am Gegenhalter gespannt. Die mitlaufende Spitze am Gegenhalter muss dabei möglichst genau über der feststehenden Spitze auf dem Drehtisch ausgerichtet werden. Das Problem ist nun, dass die Ausrichtung der Gegenhalterspitze über die Zeit nicht konstant bleibt, u.a. weil der Materialbereich des Messtisches zwischen Gegenhalter und Drehtisch z.B. bei Temperaturänderung driften kann.

Ein weiteres Problem im Zusammenhang mit dem Einsatz eines Gegenhalters besteht darin, dass ein Gegenhalter eine relativ große Störkontur darstellt. Gegenhalter werden deshalb von den Anwendern häufig auf- und wieder abgebaut. Wie oben beschrieben, muss der Gegenhalter sehr genau zum Drehtisch ausgerichtet werden. Dies erfordert einen hohen Zeitaufwand.

Aufgabe der Erfindung ist es, eines oder mehrere der oben bezeichneten Probleme zu lösen.

Erfindungsgemäß wird eine Anordnung nach Anspruch 1 zur Verfügung gestellt.

Nach einer grundlegenden Idee der Erfindung wird bei einer Anordnung, welche ein Adapterelement, eine Drehvorrichtung und zumindest eine Zusatzeinrichtung aufweist, das Adapterelement, beispielsweise eine Adapterplatte, zur Montage einer Drehvorrichtung mit einem zusätzlichen Kopplungsmittel versehen, das zum Ankoppeln der Zusatzeinrichtung dient. Somit kann an das Adapterelement eine Zusatzeinrichtung angekoppelt werden und auch von dem Adapterelement wieder entfernt werden. Die Zusatzeinrichtung ist insbesondere ausgewählt aus einem Messkörper, beispielsweise zu Kalibrierzwecken, einem Sensorhalter und/oder einer Zubehörvorrichtung für eine an dem Adapterelement ebenfalls befestigte Drehvorrichtung.

Mit einer Anordnung der Erfindung kann eine Drehvorrichtung, die an dem Adapterelement angebracht ist bzw. über das Adapterelement in einem Messraum eines Koordinatenmessgeräts angeordnet werden, beispielsweise an einem Messtisch eines Koordinatenmessgeräts befestigt werden. Mit dem Adapterelement kann eine Drehvorrichtung mit einer Zusatzeinrichtung zu verschiedenen Zwecken versehen werden. Mit einem oder mehreren Messkörpern kann beispielsweise die Lage einer Drehachse der Drehvorrichtung ermittelt oder überprüft werden. Die Messkörper dienen in diesem Fall als Referenz zur Ermittlung bzw. Überprüfung der Lage der Drehachse. Alternativ oder zusätzlich kann als Zubehörvorrichtung eine Vorrichtung zum Halten eines Werkstücks auf oder an der Drehvorrichtung an das Adapterelement angekoppelt werden. Beispielsweise kann ein Gegenhalter neben einem Drehtisch angekoppelt werden.

Nach der grundlegenden Idee der Erfindung sind sowohl eine Drehvorrichtung als auch eine Zusatzeinrichtung an demselben Adapterelement befestigbar bzw. ankoppelbar. Durch das Adapterelement wird eine konstante Position und/oder Orientierung von Drehvorrichtung und Zusatzeinrichtung relativ zueinander erzielt. Durch die Befestigung bzw. Ankopplung an einem selben Adapterelement wird die Position und/oder Orientierung relativ zueinander konstant oder weitgehend konstant gehalten. So kann beispielsweise angenommen werden, dass sich Position und/oder Orientierung eines oder mehrerer Messkörper relativ zu einer Drehachse einer Drehvorrichtung nicht ändert oder sich die Position und/oder Orientierung eines Gegenhalters relativ zu einer Drehachse der Drehvorrichtung nicht ändert.

Das Kopplungsmittel zum Ankoppeln einer Zusatzeinrichtung ist vorzugsweise benachbart zu einer Befestigungsstelle für die Drehvorrichtung an dem Adapterelement angeordnet. Dies bedeutet, dass eine Zusatzeinrichtung im angekoppelten Zustand benachbart zu einer Drehvorrichtung, anders ausgedrückt: neben einer Drehvorrichtung, an dem Adapterelement positioniert ist. Ein Abstand zwischen Zusatzeinrichtung und Drehvorrichtung wird vorzugsweise möglichst gering gehalten. Ein Kopplungsmittel für eine Zusatzeinrichtung ist vorzugsweise auf einer gleichen Seite des Adapterelements angeordnet wie ein Befestigungsmittel und/oder ein Befestigungsbereich zur Befestigung der Drehvorrichtung an dem Adapterelement. Somit sind eine an dem Adapterelement befestigte Drehvorrichtung und eine an das Adapterelement angekoppelte Zusatzeinrichtung vorzugsweise auf der gleichen Seite des Adapterelements befestigt bzw. angekoppelt. Diese Seite des Adapterelements wird auch als Befestigungsseite oder Koppelseite bezeichnet.

Das Adapterelement kann mehrere Kopplungsmittel aufweisen, wobei an ein jedes der Kopplungsmittel, oder mit einem jeden der Kopplungsmittel, jeweils eine Zusatzeinrichtung gekoppelt werden kann. Art, Anzahl und Zusammenstellung der Zusatzeinrichtungen sind in beliebigen Kombinationen frei wählbar, wobei nachfolgend noch auf spezielle Kombinationen eingegangen wird.

Wenn mehrere Kopplungsmittel vorhanden sind, so werden die zum Zweck der nachfolgenden Beschreibung zwecks Unterscheidung nummeriert, beispielsweise bezeichnet als "erstes" Kopplungsmittel, "zweites" Kopplungsmittel usw. Die Begriffe "erstes", "zweites", "drittes" usw. bedeuten eine Nummerierung von ansonsten gleich bezeichneten Gegenständen, um die Gegenstände voneinander eindeutig unterscheiden zu können. Die Nummerierung ansonsten gleich bezeichneter Gegenstände kann geändert werden, ohne den Sinn der Erfindung zu verlassen. Die Nummerierung kann in alternativer Formulierung auch weggelassen werden und durch einen anderweitigen eindeutigen Bezug, beispielsweise zu einem anderen offenbarten Gegenstand, ersetzt werden. Ferner ist bei Vorhandensein eines Gegenstands mit einer höheren Nummerierung, wie beispielsweise einem dritten Kopplungsmittel, nicht zwingend vorausgesetzt, dass auch ein erstes und ein zweites Kopplungsmittel vorhanden sein müssen. Beispielsweise kann ein erstes Kopplungsmittel zum Ankoppeln eines ersten Messkörpers vorhanden sein, ein zweites Kopplungsmittel zum Ankoppeln eines zweiten Messkörpers, ein drittes Kopplungsmittel zum Ankoppeln eines dritten Messkörpers und ein viertes Kopplungsmittel zum Ankoppeln einer Zubehörvorrichtung für die Drehvorrichtung. Dies stellt eine spezielle Kombination dar. Aus dieser Kombination kann beispielsweise das dritte Kopplungsmittel wieder entfernt werden, um zu einer weniger speziellen Kombination zu kommen. Dennoch wird bei dieser weniger speziellen Kombination der Einfachheit halber die Nummerierung der Kopplungsmittel aus der speziellen Kombination beibehalten, sodass ein erstes, ein zweites und ein viertes Kopplungsmittel vorhanden sind und ein drittes Kopplungsmittel nicht mehr vorhanden ist. Es ist aber auch möglich, die Nummerierung in der allgemeineren Kombination anzupassen und beispielsweise das Kopplungsmittel zum Ankoppeln eines Zubehörteils nun als drittes Kopplungsmittel zu bezeichnen.

Angegeben wird von der Erfindung eine Anordnung, aufweisend
ein Adapterelement zur Montage einer Drehvorrichtung mit einer Drehachse im Messraum eines Koordinatenmessgeräts, insbesondere auf dem Messtisch eines Koordinatenmessgeräts, aufweisend
- zumindest ein erstes Befestigungsmittel und/oder einen ersten Befestigungsbereich zur Befestigung des Adapterelements in dem Messraum,
- zumindest ein zweites Befestigungsmittel und/oder einen zweiten Befestigungsbereich zur Befestigung der Drehvorrichtung an dem Adapterelement,
wobei das Adapterelement zumindest ein Kopplungsmittel zum Ankoppeln einer Zusatzeinrichtung aufweist, wobei das Kopplungsmittel an dem Adapterelement benachbart zu dem zweiten Befestigungsmittel und/oder dem einen zweiten Befestigungsbereich für die Drehvorrichtung angeordnet ist, dass die Zusatzeinrichtung an dem Adapterelement im angekoppelten Zustand neben der Drehvorrichtung positionierbar ist,
eine Drehvorrichtung, die an dem Adapterelement befestigt ist,
zumindest eine Zusatzeinrichtung, die an das Adapterelement angekoppelt ist und neben der Drehvorrichtung positioniert ist, und die ausgewählt ist aus einem Messkörper, einem Sensorhalter oder einer Zubehörvorrichtung für die Drehvorrichtung.

Der Messraum ist ein Raum im KMG, der zwecks Koordinatenmessung zugänglich ist, insbesondere ein Raum, in dem von einem Messsystem des KMG Gegenstände zwecks Koordinatenmessung erfassbar sind, insbesondere taktil oder optisch.

Ein Kopplungsmittel ist insbesondere dazu ausgebildet, mit einem oder mehreren weiteren Kopplungsmitteln zusammen zu wirken, um eine Kopplung herzustellen. Insbesondere ist ein Kopplungsmittel ein Verbindungsmittel und dient zur Herstellung einer Verbindung, wie einer Verbindung zu einer erwähnten Zusatzeinrichtung. Die Verbindung kann form- und/oder kraftschlüssig sein.

Das Kopplungsmittel kann so ausgebildet oder beschaffen sein, dass eine Ankopplung der Zusatzeinrichtung in reproduzierbarer Position und/oder Orientierung ermöglicht ist. Es kann bei dieser Ausführungsform eine Zusatzeinrichtung entkoppelt und wieder in gleicher Position und/oder Orientierung angekoppelt werden.

Das Adapterelement kann einstückig oder mehrteilig ausgebildet sein. Insbesondere kann das Adapterelement ein erstes Teil aufweisen, an dem ein Befestigungsmittel oder Befestigungsbereich zur Befestigung einer Drehvorrichtung vorgesehen ist, und ein zweites Teil, an dem ein Kopplungsmittel zum Ankoppeln einer Zusatzeinrichtung vorgesehen ist. Weitere Teile (drittes, viertes usw.) können vorgesehen sein, die jeweils ein Kopplungsmittel zum Ankoppeln einer weiteren Zusatzeinrichtung (zweite Zusatzeinrichtung, dritte Zusatzeinrichtung usw.) aufweisen. Es kann somit ein erstes Teil eines Adapterelements, das als Grundteil bezeichnet werden kann, um Kopplungsmöglichkeiten zum Ankoppeln einer oder mehrerer Zusatzeinrichtungen erweitert werden. Zwischen einem ersten Teil eines Adapterelements und einem zweiten Teil eines Adapterelements ist vorzugsweise eine Schnittstelle vorgesehen. Die Schnittstelle kann eine reproduzierbare Verkopplung der Teile ermöglichen, sodass reproduzierbar eine bestimmte Position und/oder Orientierung, vorzugsweise eine bestimmte Position, beider Teile relativ zueinander hergestellt werden kann. An dem ersten Teil und dem zweiten Teil eines Adapterelements können jeweils Kopplungsmittel vorgesehen sein. Solche Kopplungsmittel können zur Herstellung einer reproduzierbaren Kopplung der Teile ausgebildet sein. In analoger Weise kann dies für ein drittes Teil, ein viertes Teil usw. eines Adapterelements gelten.

Ein Adapterelement kann insbesondere plattenförmig oder winkelförmig ausgeführt sein, in Form einer Adapterplatte oder eines Adapterwinkels.

Die Drehvorrichtung ist insbesondere ein Drehtisch, beispielsweise ein einachsiger, ein zweiachsiger, oder ein n-achsiger (n = ganze Zahl), Drehtisch, ein Drehgelenk mit einer Drehachse, oder ein Dreh-Schwenk-Gelenk mit zwei oder mehr Drehachsen. Eine Drehvorrichtung weist insbesondere einen Rotor und einen Stator auf. Ein Stator wird vorzugsweise an einem Adapterelement der erfindungsgemäßen Anordnung befestigt und ein Rotor ist relativ zu dem Adapterelement drehbar. Bei einem Drehtisch kann der Rotor als Drehteller ausgebildet sein. Bei einem Drehtisch kann in einer anderen Variante ein Rotor mit einem Drehteller oder einer Planscheibe gekoppelt werden. Auf einem Drehteller oder einer Planscheibe kann ein Werkstück positioniert werden.

Die Drehachse der Drehvorrichtung ist im Sinne dieser Erfindung als eine virtuelle Drehachse zu verstehen. Anders ausgedrückt ist die Drehachse eine nicht gegenständliche Drehachse, um welche Teile der Drehvorrichtung, insbesondere ein Rotor und ein Stator, relativ zueinander drehbar sind.

Eine Zusatzeinrichtung ist insbesondere eine Kalibriereinrichtung, eine Messeinrichtung oder Messhilfseinrichtung oder einer Vorrichtung zum Halten eines Werkstücks.
Die Zusatzeinrichtung kann insbesondere ausgewählt sein aus einem Messkörper, einem Sensorhalter und/oder einer Zubehörvorrichtung für die Drehvorrichtung.

Das Kopplungsmittel zum Ankoppeln einer Zusatzeinrichtung kann mit einem weiteren Kopplungsmittel zusammenwirken, das an der Zusatzeinrichtung vorgesehen ist. Die Kopplungsmittel an Adapterelement und an Zusatzeinrichtung können derart ineinander greifend ausgebildet sein, dass eine eindeutige relative Position und/oder Orientierung der Zusatzeinrichtung relativ zu dem Adapterelement herstellbar ist. Wenn Kopplungsmittel an Adapterelement und Zusatzeinrichtung beispielsweise ineinander greifen, um eine Kopplung zwischen Zusatzeinrichtung Adapterelement herzustellen, kann eine Bewegung der Zusatzeinrichtung relativ zu dem Adapterelement verhindert werden insbesondere eine selbsttätige Bewegung ohne Eingriff des Anwenders. Gegebenenfalls kann die Verbindung von Zusatzeinrichtung zu Adapterelement durch ein oder mehrere weitere Verbindungsmittel gesichert werden, um ein Lösen der Zusatzeinrichtung von dem Adapterelement zu verhindern.

Das Kopplungsmittel kann an dem Adapterelement ausgeformt oder daran angebracht sein. Ein Kopplungsmittel kann einteilig ausgebildet sein oder aus mehreren Teilen ausgebildet sein. Mehrere Teile eines Kopplungsmittels können einzeln an dem Adapterelement angebracht sein. Analoges gilt für ein Kopplungsmittel, das an einer Zusatzeinrichtung vorgesehen ist.

Zusammenwirkende Kopplungsmittel, also beispielsweise ein Kopplungsmittel an dem Adapterelement und ein Kopplungsmittel an einer Zusatzeinrichtung, weisen insbesondere jeweils Formmerkmale auf, wobei die Formmerkmale der beiden Kopplungsmittel komplementär zueinander sind.

Zwei zusammenwirkende Kopplungsmittel oder zur Zusammenwirkung vorgesehene Kopplungsmittel können zur Ausbildung einer formschlüssigen und/oder kraftschlüssigen Verbindung ausgebildet sein.

Ein Kopplungsmittel eines Adapterelements und ein Kopplungsmittel einer Zusatzeinrichtung können zur Herstellung einer Kopplung zwischen Adapterelement und Zusatzeinrichtung mit einem oder mehreren weiteren Kopplungsmitteln zusammenwirken, das/die ein weiteres, getrenntes Teil sein kann/können. Beispielsweise können Adapterelement und Zusatzeinrichtung jeweils ein Loch als Kopplungsmittel aufweisen und als weiteres Kopplungsmittel kann eine Schraube hinzukommen, die durch eines der Löcher geführt wird und in ein Innengewinde in das andere der Löcher eingedreht wird.

Spezielle Ausgestaltungen für Kopplungsmittel sind nachfolgend beispielhaft angegeben.

In einer Ausführungsform sind das Kopplungsmittel an dem Adapterelement und ein damit zusammenwirkendes Kopplungselement an einer Zusatzeinrichtung für eine Steckverbindung ausgebildet bzw. bilden eine Steckverbindung. Beispielsweise kann eine Zusatzeinrichtung einen Schaft aufweisen, der ein Kopplungsmittel der Zusatzeinrichtung bildet und das Adapterelement kann eine Vertiefung aufweisen, in welche der Schaft eingesteckt werden kann. Das Prinzip kann auch genau umgekehrt sein.

In einer Ausführungsform bilden ein Kopplungsmittel an dem Adapterelement und ein Kopplungsmittel an einer Zusatzeinrichtung eine Dreipunktlagerung. Hierfür können folgende Beispiele angegeben werden:
- Das Adapterelement weist als Kopplungsmittel drei Walzen auf, vorzugsweise aus Hartmetall, insbesondere mit einer 120°-Teilung. Die Zusatzeinrichtung weist drei Kugelpaare auf. Die Walzen können in die Kugelpaare eingreifen. Selbstverständlich kann die Anordnung umgekehrt sein, also Walzen an der Zusatzeinrichtung und Kugelpaare an dem Adapterelement.
- Das Adapterelement kann als Kopplungselement drei Kugeln aufweisen, vorzugsweise in 120°-Teilung, und die Zusatzeinrichtung kann drei Vertiefungen als Kopplungsmittel aufweisen, in welche die Kugeln eingreifen. Eine umgekehrte Anordnung ist möglich. Statt in Vertiefungen können Kugeln in Walzenpaare oder Kugeltripeleingreifen.

Diese beispielhafte Aufzählung von Dreipunktlagerungen ist nicht abschließend und soll nur in nicht beschränkender Weise das Prinzip verdeutlichen.

Ein Kopplungsmittel an dem Adapterelement kann zumindest eine Erhöhung (auch bezeichnet als Vorsprung) und/oder zumindest eine Vertiefung aufweisen. Ein Kopplungsmittel an der Zusatzeinrichtung kann zumindest eine Erhöhung und/oder zumindest eine Vertiefung aufweisen. Die Begriffe Erhöhung und Vertiefung können relativ aufeinander bezogen sein. Erhöhungen und/oder Vertiefungen an dem Adapterelement und an der Zusatzeinrichtung sind vorzugsweise komplementär zueinander geformt. Beispielhaft hierfür sind eine Krone und eine Gegenkrone, die vorzugsweise komplementär zueinander geformt sind. Weitere Beispiele sind Steckverbindungselemente, wobei ein Steckverbindungselement an dem Adapterelement vorgesehen ist und ein komplementäres Steckverbindungselement an der Zusatzeinrichtung vorgesehen ist. Noch ein weiteres Beispiel für miteinander in Wirkverbindung stehende Kopplungsmittel sind eine Schraube und eine Vertiefung mit Innengewinde.

Das oben erwähnte erste Befestigungsmittel zur Befestigung des Adapterelements im Messraum, insbesondere auf einem Messtisch, kann an dem Adapterelement angebracht oder ausgebildet sein. Ein oben erwähntes zweites Befestigungsmittel zur Befestigung der Drehvorrichtung an dem Adapterelement kann an dem Adapterelement angebracht oder ausgebildet sein. Diese Befestigungsmittel können mit weiteren Befestigungsmitteln zusammenwirken, um eine Befestigung herzustellen.

Das erste Befestigungsmittel ist nicht beschränkt. Das erste Befestigungsmittel kann mit weiteren Befestigungsmitteln zur Befestigung des Adapterelements in dem Messraum zusammenwirken. Beispielhafte erste Befestigungsmittel sind eine Mehrzahl Löcher, die vorzugsweise in ihrer Anordnung deckungsgleich zu einem Lochraster in einem Messtisch sind. In Löchern eines Lochrasters auf dem Messtisch sind vorzugsweise Gewindebuchsen angeordnet. Somit kann das Adapterelement mit einer Schraube, die ein Loch in dem Adapterelement durchdringt, auf dem Messtisch angeschraubt werden, wobei die Schraube in die erwähnte Gewindebuchse eingeschraubt wird. In diesem Beispiel ist das Loch in dem Adapterelement das erwähnte erste Befestigungsmittel und die Schraube und die Gewindebuchse sind weitere Befestigungsmittel.

Das zweite Befestigungsmittel ist nicht beschränkt. Beispielhaft genannt seien Löcher, die zur Herstellung einer Schraubverbindung dienen können. Das zweite Befestigungsmittel kann zusammen mit weiteren Befestigungsmitteln zur Herstellung einer Verbindung zwischen Drehvorrichtung und Adapterelement zusammenwirken.

Ein erster Befestigungsbereich ist insbesondere ein baulicher Bereich an dem Adapterelement, der zur Herstellung einer Befestigung geeignet bzw. ausgebildet ist. Ein erster Befestigungsbereich kann beispielsweise eine Ansatzstelle oder Angriffsstelle für ein weiteres Befestigungsmittel bilden. Beispielsweise kann der erste Befestigungsbereich ein Randbereich des Adapterelements sein, an dem eine Klemme oder Spannpratze, wie aus WO 2013/156074 bekannt, ansetzbar ist. Eine analoge Offenbarung kann für einen zweiten Befestigungsbereich zur Befestigung der Drehvorrichtung gelten.

Das Adapterelement weist vorzugsweise eine Oberseite und eine Unterseite auf. Die Unterseite ist diejenige Seite, mit der das Adapterelement in einem Messraum befestigbar ist, insbesondere an einem Messtisch befestigbar ist. Die Oberseite ist die Seite, auf der eine Drehvorrichtung anordbar ist. An erwähnter Oberseite ist vorzugsweise ein zweites Befestigungsmittel und/oder ein zweiter Befestigungsbereich angeordnet. An erwähnter Oberseite ist vorzugsweise ferner ein erwähntes Kopplungsmittel zum Ankoppeln einer Zusatzeinrichtung angeordnet.

Eine Befestigung des Adapterelements im Messraum des KMG kann auf verschiedenste Art und Weise erfolgen. Erwähnt wurde bereits die Befestigung auf einem Messtisch. Verwendbar sind weitere Bauteile, die im oder außerhalb des Messraums anordenbar sind und über welche das Adapterelement in dem Messraum befestigt werden kann. Ein weiteres Bauteil kann beispielsweise an einem Messtisch oder einem weiteren Teil des KMG befestigt sein. Beispielsweise kann das Adapterelement wird an einem Rahmen befestigt werden, der den Messtisch umgibt.

Ein Messkörper kann ein taktil erfassbarer Messkörper sein oder ein optisch erfassbarer Messkörper sein. Ein taktil erfassbarer Messkörper wird auch als Antastkörper bezeichnet. Ein Messkörper weist insbesondere einen Messkörperreferenzpunkt auf, der durch Vermessen des Messkörpers ermittelbar ist, bzw. dessen Koordinaten ermittelbar sind. Relativ zu dem Messkörper-Referenzpunkt kann die Lage oder Lageänderung eines anderen Gegenstandes, eines anderen Raumpunktes oder einer Raumachse, insbesondere einer Drehachse, ermittelt werden.

Ein Antastkörper ist ein mit einem Messsystem eines taktil messenden Koordinatenmessgeräts antastbarer Körper. Ein taktiles Messsystem ist an sich bekannt. Ein taktiles Messsystem weist insbesondere einen Taster auf. Der Taster kann ein Tastelement, beispielsweise eine Tastkugel oder ein anders geformtes Tastelement, aufweisen. Ein Antasten erfolgt im Speziellen mit dem Taster, noch spezieller mit einem Tastelement des Tasters, wie von taktilen KMG allgemein bekannt.

Ein Antastkörper weist insbesondere einen durch Antasten bestimmbaren Referenzpunkt auf, auch genannt Antastkörper-Referenzpunkt. Mit Hilfe eines oder mehrerer Antastkörper-Referenzpunkte kann zumindest eine Koordinate oder die Lage, oder Lageänderung der Drehachse, relativ zu einem oder mehreren Referenzpunkten, durch Antasten eines oder mehrerer Antastkörper ermittelt werden. Eine oder mehrere Koordinaten eines Antastkörper-Referenzpunktes kann/können bekannt sein. Insbesondere kann ein Antastkörper-Referenzpunkt auf einer zu einer Koordinatenachse (KMG Hauptachse) parallelen Geraden, die durch eine Drehachse und den Referenzpunkt verläuft, positioniert sein.

Die Art des Antastkörpers ist nicht besonders beschränkt, solange an oder in dem Antastkörper ein zeitlich und relativ zu dem Körper unveränderlicher Referenzpunkt definiert werden kann, welcher reproduzierbar mit dem Messsystem des KMG erfasst oder ermittelt werden kann. Insbesondere und ohne Beschränkung darauf ist ein Antastkörper ausgewählt aus einem Ring, einer Scheibe, einem Zylinder, einem Hohlzylinder, einer Kugel, einem Endmaß, einem Innenkegel, einem Kugeltripel für selbstzentrierende Antastung oder einer Kombination davon. Ein Beispiel eines Rings ist ein Leerring, der eine sehr geringe Rundheitsabweichung aufweist, aber einen beliebigen Durchmesser aufweisen kann. Bei einem Ring, einer Scheibe, einem Zylinder, einem Hohlzylinder oder einer Kugel kann an mehreren Punkten mit dem Messsystem des KMG angetastet werden und daraus der Mittelpunkt des Rings, der Scheibe, des Zylinders oder der Kugel bestimmt werden. Beim Antasten durch Scannen erhält man eine höhere Messgeschwindigkeit beim Ermitteln eines Referenzpunkts, beispielsweise des Ring- oder Kugelmittelpunkts. Bei einem rotationssymmetrischen Antastkörper kann ein Kreisscann durchgeführt werden, vorzugsweise in konstanter Z-Höhe. Scannen bedeutet das stetige, ununterbrochene Antasten einer Kontur mit laufender (dynamischer) Messwertübernahme, wodurch eine Dichtepunktefolge entsteht.

Zum Zweck des Ankoppelns an das Adapterelement kann ein Messkörper einen Sockel, Schaft oder ein Verbindungsstück aufweisen, über welchen/welches der Messkörper angekoppelt werden kann. Ferner kann der Messkörper oben erwähnte Kopplungsmittel aufweisen, die beispielsweise an einem Schaft, Sockel oder Verbindungsstück angebracht oder ausgebildet sind.

Die Form und Ausgestaltung eines Messkörpers kann bekannt sein oder ermittelt werden, beispielsweise mit einem Messsystem des KMG, welcher Messkörper aktuell eingesetzt wird. Beispielsweise können Messkörper mit unterschiedlich hohen Schäften eingesetzt werden. Deren Länge kann vorbekannt sein oder kann identifizierbar sein. Oder es können Messkörper verschiedener Form eingesetzt werden, wie verschiedene geometrische Formen bei Antastkörpern. Die Form kann vorbekannt sein oder ermittelt werden.

Eine Zubehörvorrichtung für die Drehvorrichtung ist vorzugsweise eine Vorrichtung zum Halten eines Werkstücks. Ein Werkstück, das auf der Drehvorrichtung positioniert ist, insbesondere auf einem Rotor der Drehvorrichtung, kann mit Hilfe einer Vorrichtung zum Halten eines Werkstücks auf der Drehvorrichtung gehalten werden. Beispielhafte solcher Vorrichtungen sind ein eingangs erwähnter Gegenhalter oder ein Spitzenbock. Mit dem Adapterelement ist es möglich, eine Vorrichtung zum Halten eines Werkstücks an das Adapterelement anzukoppeln. Insbesondere kann das Ankoppeln in reproduzierbarer Art und Weise erfolgen, wobei insbesondere die Vorrichtung in Position und/oder Orientierung relativ zu einer Drehvorrichtung, die an das Adapterelement gekoppelt ist, reproduzierbar angeordnet werden kann. Insbesondere ist es möglich, eine eingangs thematisierte mitlaufende Spitze eines Gegenhalters auf der Drehachse zu positionieren.

Mit dem Adapterelement ist es möglich, einen Messkörper neben einer an dem Adapterelement befestigten Drehvorrichtung anzubringen. Es ist insbesondere möglich, einen Messkörper in reproduzierbarer Position und/oder Orientierung relativ zu einer an dem Adapterelement befestigten Drehvorrichtung anzubringen und damit einen Messkörper-Referenzpunkt entsprechend reproduzierbar anzuordnen bzw. zu positionieren. Es ergeben sich für einen Anwender folgende Vorteile, die auch anhand eines später beschriebenen erfindungsgemäßen Verfahrens klar werden:
- Die Position eines oder mehrerer Messkörper können vorbekannt sein. Dadurch entfällt das manuelle Einmessen von Messkörpern durch den Anwender. Das System findet die Messkörper automatisch bzw. ist eine Einmessung nur einmalig erforderlich. Die aus der Einmessung erhaltenen Ergebnisse können in einer Steuerung eines Koordinatenmessgeräts hinterlegt sein. Es kann dadurch ein fester Bezug von Messkörper oder Messkörper-Referenzpunkt zur Drehachse hinterlegt sein, sodass bei bekannter Position und/oder Orientierung der Drehvorrichtung oder der Drehachse auch die Position des Messkörpers oder seines Referenzpunkts vorbekannt ist. In der Regel wird die Position und Orientierung der Drehachse ermittelt, da hier oft höchste Genauigkeit gefordert ist. Von der Drehachs-Pose kann dann auf die Lage der Messkörper geschlossen werden. Dies ist besonders interessant, wenn die Lagebeziehungen in irgendeiner Art und Weise in der Steuerung hinterlegt sind. Bei Manchen Drehtischen ist allerdings nur die Position der Drehtischachse erforderlich, nicht aber dessen Orientierung. Deswegen ist es auch möglich, vom Messkörper-Referenzpunkt auf die Lage der Drehachse zu schließen.
- Durch die fest vorgegebene Ankopplung mittels eines beschriebenen Kopplungsmittels an das Adapterelement sinkt der Setup-Aufwand für den Anwender.
- Durch die fest vorgegebene Ankopplung an einem Kopplungsmittel ist der Ort des Messkörper-Referenzpunkts relativ zur Drehachse, insbesondere auch seine Koordinaten, in einem Koordinatensystem, beispielsweise einem Gerätekoordinatensystem eines KMG, fixierbar und ermittelbar, insbesondere auch reproduzierbar. Ein relativer Bezug zwischen Messkörper-Referenzpunkt und Drehachse kann ermittelt werden, beispielsweise im Rahmen einer Erst-Einmessung. Eine zeitliche Änderung dieses Bezugs (Drift) kann dann durch eine oder mehrere spätere erneute Ermittlungen des Bezugs, durch eine sog. Wiederholungsmessung, erhalten werden.

Nachfolgend werden Kombinationen mehrerer Kopplungsmittel und mehrerer Zusatzeinrichtungen diskutiert.

In einer Ausführungsform weist das Adapterelement ein erstes Kopplungsmittel zum Ankoppeln eines ersten Messkörpers und ein zweites Kopplungsmittel zum Ankoppeln eines zweiten Messkörpers auf. Durch die Möglichkeit des Ankoppelns zweier Messkörper kann eine noch einfachere und genauere Bestimmung der Lage der Drehachse erfolgen. Insbesondere können zwei Koordinaten einer Drehachse in einem Gerätekoordinatensystem eines KMG ermittelt werden. Das erste Kopplungsmittel und das zweite Kopplungsmittel an dem Adapterelement können so angeordnet sein und ankoppelbare erste und zweite Messkörper können so ausgebildet sein, dass ein erster Messkörper-Referenzpunkt (des ersten Messkörpers) und ein zweiter Messkörper-Referenzpunkt (des zweiten Messkörpers) auf zwei verschiedenen Koordinaten einer Drehachse positionierbar sind, wie beispielsweise einer X- und einer Y-Koordinate einer Drehachse.

Das Adapterelement ist insbesondere folgendermaßen beschaffen: wenn eine Drehvorrichtung mit einer Drehachse an dem Adapterelement befestigt ist und wenn ein erster Messkörper und ein zweiter Messkörper an das Adapterelement angekoppelt sind, schließen eine erste virtuelle Linie, die sich von der Drehachse einer an der Adapterelement befestigten Drehvorrichtung bis zu einem Messkörper-Referenzpunkt des ersten Messkörpers erstreckt und senkrecht zur Drehachse ist, und eine zweite virtuelle Linie, die sich von der Drehachse bis zu einem Messkörper-Referenzpunkt des zweiten Messkörpers erstreckt und senkrecht zur Drehachse ist, einen Winkel von 90° oder im Wesentlichen 90° ein. Hierauf wird anhand der erfindungsgemäßen Anordnung noch eingegangen.

In einer Ausführungsform der Erfindung weist das Adapterelement neben dem oben erwähnten ersten Kopplungsmittel zum Ankoppeln eines ersten Messkörpers und dem oben erwähnten zweiten Kopplungsmittel zum Ankoppeln eines zweiten Messkörpers noch ein drittes Kopplungsmittel zum Ankoppeln eines dritten Messkörpers auf. Hierdurch wird folgender Vorteil erzielt: Es kann anhand eines angekoppelten dritten Messkörpers ein dritter Messkörper-Referenzpunkt bestimmt werden, der mit einem ersten Messkörper-Referenzpunkt des ersten Messkörpers und einem zweiten Messkörper-Referenzpunkt des zweiten Messkörpers eine Ebene definiert. Durch wiederholtes Ermitteln der Lage einer solchen Ebene, beispielsweise in einem Gerätekoordinatensystem eines KMG, kann eine Änderung der Lage der Ebene ermittelt werden und daraus auf eine Verkippung des Adapterelements, einer darin angebrachten Drehvorrichtung oder einer Drehachse geschlossen werden, beispielsweise in einem Gerätekoordinatensystem eines KMG.

In einer Ausführungsform der Erfindung weist das Adapterelement ein viertes Kopplungsmittel zum Ankoppeln einer Zubehörvorrichtung für die Drehvorrichtung auf, insbesondere einer Vorrichtung zum Halten eines Werkstücks, im Speziellen eines Gegenhalters oder eines Spitzenbockes. Die Vorteile einer Ankopplung, vorzugsweise eine reproduzierbaren Ankopplung, einer solchen Zubehörvorrichtung, insbesondere eines Gegenhalters mit mitlaufender Spitze, wurden zuvor erläutert.

In einer Ausführungsform besteht das Adapterelement aus einem temperaturinvarianten Material oder weist einen oder mehrere Bereiche aus einem temperaturinvarianten Material auf. Der Begriff temperaturinvariant bedeutet, dass der Ausdehnungskoeffizient des Materials kleiner oder gleich 2,0 · 10⁻⁶K⁻¹ im Temperaturbereich von 20°C bis 90°C ist. Ein beispielhaftes derartiges Material ist eine Eisen-Nickel-Legierung aus 64 % Eisen und 36 % Nickel, die auch unter dem Namen "Invar" bekannt ist. Ein weiteres temperaturinvariantes Material ist Glaskeramik mit extrem niedriger thermischer Ausdehnung, die beispielsweise unter dem Markennamen Zerodur® vertrieben wird.

Durch ein temperaturinvariantes Material wird eine besonders hohe Konstanz der relativen Position und/oder Orientierung einer Zusatzeinrichtung relativ zu der Drehachse einer an der Adapterplatte befestigten Drehvorrichtung erzielt. So bleibt beispielsweise die Position und/oder Orientierung eines Messkörpers relativ zu der Drehachse besonders konstant.

In einer speziellen Variante erstreckt sich ein Bereich aus temperaturinvariantem Material von dem Ort des Adapterelements, an dem das Kopplungsmittel ausgebildet oder angebracht ist, bis zu dem Ort des Adapterelements, an welchem die Drehachse einer an dem Adapterelement befestigten Drehvorrichtung das Adapterelement trifft. Insbesondere ist letztgenannter Ort ein Ort des Zentrums eines Drehtisches.

Wenn das Adapterelement Bereiche aus einem temperaturinvarianten Material aufweist, können solche Materialbereiche als Einlegeteile ausgeführt sein. Solche Einlegeteile können einen definierten Befestigungspunkt zur Befestigung an weiteren Teilen des Adapterelements aufweisen.

Es kann bei einem mehrteiligen Adapterelement, das oben bereits erwähnt wurde, ein erstes Teil des Adapterelements aus temperaturinvariantem Material sein und ein zweites Teil, an dem das Kopplungsmittel für eine Zusatzeinrichtung vorgesehen ist, aus temperaturinvariantem Material sein. Hiermit wird der Vorteil erzielt, dass das zweite Teil an einer beliebigen Stelle des ersten Teils befestigt werden kann und die relative Lage von Befestigungsmittel oder Befestigungsbereich für eine Drehvorrichtung an dem ersten Teil und dem Kopplungsmittel für die Zusatzeinrichtung an dem zweiten Teil thermisch invariant ist. Bei beliebiger Befestigung kann die Position und/oder Orientierung der Zusatzeinrichtung relativ zu einer Drehachse einer an dem Adapterelement befestigten Drehvorrichtung einmalig ermittelt werden.

In einer Ausführungsform weist das Adapterelement ein Kopplungsmittel zum Ankoppeln der Drehvorrichtung an das Adapterelement auf, vorzugsweise zum Ankoppeln in reproduzierbarer Position und/oder Orientierung, wozu das Kopplungsmittel entsprechend ausgestaltet sein kann. Hierzu wird auf Sinn, Zweck, Art und Weise und Beschaffenheit eines Kopplungsmittels Bezug genommen, welche bereits zuvor anhand eines Kopplungsmittels für eine Zusatzeinrichtung erläutert wurden. Eine analoge Offenbarung kann auch für ein Kopplungsmittel für eine Drehvorrichtung gelten. An der Drehvorrichtung kann ein Kopplungsmittel ausgebildet sein, das mit dem Kopplungsmittel an dem Adapterelement zusammenwirkt, insbesondere derart zusammenwirkt, dass eine reproduzierbare Position und/oder Orientierung von Drehvorrichtung zu Adapterelement herstellbar ist.

Das Adapterelement kann so ausgebildet sein, dass die Drehachse einer an dem Adapterelement befestigten Drehvorrichtung parallel zu einer Messtischoberfläche ausgerichtet ist, wenn das Adapterelement mit an dem Messtisch befestigt ist. Ein Beispiel hierfür ist eine winkelförmige, insbesondere rechtwinklige Ausbildung eines Adapterelements. Das Adapterelement kann mit einem Schenkel an dem Messtisch befestigt werden und die Drehvorrichtung kann an dem zweiten, abgewinkelten Schenkel befestigt werden. Ein Kopplungsmittel zum Ankoppeln einer Zusatzeinrichtung ist vorzugsweise ebenfalls an dem abgewinkelten Schenkel vorgesehen.

Das Adapterelement kann einen oder mehrere Temperatursensoren aufweisen. Mit einem solchen Sensor kann eine Temperatur des Adapterelements ermittelt werden und daraus eine thermische Ausdehnung ermittelt werden, wenn beispielsweise der Ausdehnungskoeffizient des gewählten Materials des Adapterelements bekannt ist. Es ist möglich, eine Formveränderung des Adapterelements aufgrund thermischer Einflüsse bei Messungen zu berücksichtigen, insbesondere rechnerisch zu korrigieren.

Die Drehvorrichtung, die an dem Adapterelement befestigt ist, ist vorzugsweise mit Kopplungsmitteln angekoppelt.

Von der Erfindung wird auch eine Anordnung angegeben, aufweisend
- ein Adapterelement wie vorangehend beschrieben,
- einen ersten Messkörper,
- einen zweiten Messkörper, wobei
eine erste virtuelle Linie, die sich von der Drehachse einer an der Adapterelement befestigten Drehvorrichtung bis zu einem Messkörper-Referenzpunkt des ersten Messkörpers erstreckt und senkrecht zur Drehachse ist, und eine zweite virtuelle Linie, die sich von der Drehachse bis zu einem Messkörper-Referenzpunkt des zweiten Messkörpers erstreckt und senkrecht zur Drehachse ist, einen Winkel von 90° oder im Wesentlichen 90° einschließen. Im Wesentlichen 90° bedeutet insbesondere eine Abweichung von bis zu 5°, vorzugsweise bis zu 2°, also 90° ± 5°, vorzugsweise 90° ± 2°. Der erste und der zweite Messkörper sind bezüglich der Drehachse so angeordnet, dass sich oben erwähnte erste und zweite virtuelle Linie genannten Winkel einschließen. Die virtuellen Linien sind kein gegenständliches Merkmal, sondern gedachte Linien, mit deren Hilfe ein räumlicher Bezug von Elementen relativ zueinander bzw. eine Anordnung von Elementen relativ zueinander festgelegt wird.

Bei dieser Anordnung können Messkörper-Referenzpunkte sehr gut auf zwei verschiedenen Koordinaten eines kartesischen Koordinatensystems positioniert werden. Eine solche Anordnung eignet sich insbesondere für ein Verfahren zur Bestimmung der Position einer Drehachse, das in WO 2013/164344 A1 beschrieben ist.

Bei den erfindungsgemäßen Anordnungen können Zusatzeinrichtungen jeweils mit einem Erkennungsmittel versehen sein. Mit diesem Erkennungsmittel kann die Zusatzeinrichtung von einer Steuerung eines Koordinatenmessgeräts erkennbar sein. Insbesondere kann zwischen unterschiedlichen Zusatzeinrichtungen, insbesondere Zusatzeinrichtungen mit verschiedener Geometrie, unterschieden werden. Weiterhin kann automatisch festgestellt werden, ob eine Zusatzeinrichtung vorhanden ist oder nicht. Beispielhafte Erkennungsmittel sind ID-Chips. Ein Erkennungsmittel kann zum kontaktlosen Austausch von Daten per Funk eingerichtet sein, wobei ein RFID Tag als Beispiel zu nennen ist.

Die Anordnung, insbesondere ein Adapterelement oder eine Zusatzeinrichtung, kann einen Speicher aufweisen, in dem Daten zu der betreffenden Zusatzeinrichtung hinterlegt sind, beispielsweise Kalibrierdaten. Beispielhafte Speichereinrichtungen sind Speicherchips. Eine Speichereinrichtung kann mit einem oben erwähnten Erkennungsmittel in einer baulichen Einheit ausgeführt sein, beispielsweise in einem Chip. Eine Speicherung von Daten, insbesondere von Kalibrierdaten, ist insbesondere bei Gegenhaltern vorteilhaft, da Gegenhalter aufgrund üblicherweise großer Abmessungen nennenswerte Exemplarunterschiede aufweisen. In einem erwähnten Speicher kann insbesondere ein räumlicher Bezug zwischen einem Kopplungsmittel für den Gegenhalter an dem Adapterelement und einer oder mehr, insbesondere zwei, Koordinaten einer Gegenhalterspitze hinterlegt sein, wobei dieser räumliche Bezug die Lage der Spitze relativ zu dem Kopplungsmittel und/oder weiteren Elementen des Adapterelements ausdrückt, wenn der Gegenhalter an das Adapterelement angekoppelt ist. In einer dritten Koordinate, beispielsweise Z, kann der räumliche Bezug uneindeutig sein oder fehlen, wenn die Spitze entlang dieser Koordinate beweglich ist.

Die Erfindung betrifft in einem weiteren Aspekt ein Koordinatenmessgerät, gemäß Anspruch 11, aufweisend eine vorangehend offenbarte Anordnung. Ein Adapterelement der Anordnung ist in einem Messraum, insbesondere an einem Messtisch des Koordinatenmessgeräts befestigt. Die Anordnung ist insbesondere mit einem Adapterelement in einem Messraum, insbesondere an dem Messtisch befestigt.

Das Koordinatenmessgerät kann ein taktiles Koordinatenmessgerät sein, aufweisend ein vorangehend bereits erläutertes taktiles Messsystem. Das Koordinatenmessgerät kann ein optisches Koordinatenmessgerät sein, d.h. ein Koordinatenmessgerät mit einem optischen Messsystem. Insbesondere ist das Koordinatenmessgerät ein Portal-Koordinatenmessgerät oder ein Horizontalarm-Koordinatenmessgerät. Ein Messtisch ist beispielsweise aus Granit, Glas oder aus Metall angefertigt und verfügt vorzugsweise über netzartig verteilte Befestigungspunkte, wie Gewindebohrungen, auch bezeichnet als Lochraster. An solchen Befestigungspunkten kann ein Adapterelement befestigt sein.

In einem weiteren Aspekt betrifft die Erfindung ein Verfahren, gemäß Anspruch 12, zur Bestimmung der Lage einer Drehachse im Gerätekoordinatensystem eines Koordinatenmessgeräts, wobei eine Anordnung wie zuvor beschrieben in einem Koordinatenmessgerät bereitgestellt wird, wobei
- das Adapterelement der Anordnung im Messraum des Koordinatenmessgeräts befestigt ist,
- als Zusatzeinrichtung der Anordnung ein erster Messkörper, der einen relativ zur Drehachse der Drehvorrichtung ortsfest positionierten ersten Messkörper-Referenzpunkt aufweist, und der an das Adapterelement angekoppelt ist,
und das Verfahren die Schritte umfasst:
a) Ermitteln zumindest einer Koordinate des ersten Messkörper-Referenzpunkts mit einem Messsystem des Koordinatenmessgeräts.
b) Ermitteln zumindest einer Koordinate der Drehachse (D). Insbesondere kann die Koordinate in einem Gerätekoordinatensystem des KMG ermittelt werden. Hierbei wird eine relative Position und/oder Orientierung von Drehachse und erstem Messkörper-Referenzpunkt erhalten.
c) Wiederholen des Schrittes a) an zumindest einem späteren Zeitpunkt und Ermitteln der zumindest einen Koordinate der Drehachse an dem späteren Zeitpunkt aus der zumindest einen Koordinate des ersten Messkörper-Referenzpunkts.

Die oben erwähnten gegenständlichen Merkmale des Verfahrens wurden bereits zuvor in dieser Beschreibung erläutert. Hierauf und auf alle weiteren gegenständlichen Merkmale dieser Erfindung wird Bezug genommen. Alle gegenständlichen Merkmale dieser Erfindung können einzeln oder in Kombination in dem Verfahren eingesetzt werden.

Mit dem erfindungsgemäßen Verfahren ist es möglich, eine zeitliche Drift der Position der Drehachse festzustellen und vorzugsweise zu korrigieren, wenn erwünscht.

Das in dem Verfahren verwendete Messsystem des Koordinatenmessgeräts kann insbesondere ein taktiles Messsystem sein oder ein optisches Messsystem.

Durch wiederholte Bestimmung der zumindest einen Koordinate des ersten Messkörper-Referenzpunkts kann die Lage der Drehachse ermittelt werden bzw. eine Änderung der Lage der Drehachse ermittelt werden. Es ist mit dem Verfahren möglich, eine zeitliche Drift der Position einer Drehachse festzustellen und vorzugsweise zu korrigieren, wenn erwünscht. Mit dem erfindungsgemäßen Verfahren wird ein genaues und schnelles Verfahren zur Bestimmung der räumlichen Lage einer Drehachse bereitgestellt, das universell für alle KMG mit Drehtisch einsetzbar ist. Das Einmessen der Drehachse kann einmalig erfolgen, beispielsweise anhand von Prüfkörpern, die an der Drehvorrichtung angebracht sind. Spätere Bestimmungen der Lage der Drehachse können auf vereinfachte Weise anhand eines oder mehrerer Messkörper erfolgen, die vorzugsweise neben der Drehvorrichtung an dem Adapterelement positioniert sind. Die Messkörper können so weit von der Drehvorrichtung entfernt positioniert sein, dass eine spätere Bestimmung der Lage der Drehachse auch möglich ist, wenn an oder auf der Drehvorrichtung ein Gegenstand platziert ist, beispielsweise ein Werkstück auf einem Drehtisch.

Mit dem erfindungsgemäßen Verfahren können Standardabläufe für die Lagebestimmung einer Drehachse geliefert werden, wobei jeweils nur eine Position eines Messkörpers im Koordinatensystem des KMG bestimmt werden muss. Der Anwender muss keine weitere Eingabe machen. Da der Messkörper jeweils mindestens in einer Koordinate ortsfest zur Drehachse angeordnet ist, entsteht weniger Ungenauigkeit bei der Driftkorrektur. Eine Drift ist beispielsweise eine eingangs erwähnte Nullpunktdrift, eine Veränderung einer Tastergeometrie des KMG und/oder eine Verformung des Messtisches.

Mit Hilfe des Antastens eines Messkörpers kann eine Lagebestimmung einer Drehachse sehr schnell vorgenommen werden.

Bei dem erfindungsgemäßen Verfahren ist eine Ungenauigkeit aufgrund von CAA (Computer Aided Accuracy)-Restfehlern ausgeschlossen, da diese Restfehler beim erstmaligen Ermitteln der Position eines Messkörper-Referenzpunkts und bei einer später erfolgenden erneuten Bestimmung dieser Position identisch ist.

In dem erfindungsgemäßen Verfahren können auf einfache Weise konstante Bedingungen sichergestellt werden, da auf dem Drehtisch und am KMG keine Veränderungen vorgenommen werden müssen, um die Lage der Drehachse zu einem oder mehreren späteren Zeitpunkten zu bestimmen. So ist es beispielsweise nicht erforderlich, ein Werkstück zur erneuten Einmessung einer Drehachse von einem Drehtisch zu entfernen.. Das Verfahren ermöglicht somit auf einfache Weise die Bestimmung der Lage der Drehachse im laufenden Messbetrieb.

In einer Variante des Verfahrens ist der erste Messkörper-Referenzpunkt auf der X-Koordinate oder nahe bei der X-Koordinate der Drehachse positioniert. Dadurch kann auf einfache Weise die X-Koordinate der Drehachse festgestellt werden.

In einer weiteren Variante des Verfahrens weist die im Verfahren eingesetzte Anordnung auf:
- einen zweiten Messkörper, der einen relativ zur Drehachse der Drehvorrichtung ortsfest positionierten zweiten Messkörper-Referenzpunkt aufweist, und der an das Adapterelement angekoppelt ist,
und das Verfahren umfasst die Schritte:
d) Ermitteln zumindest einer Koordinate des zweiten Messkörper-Referenzpunkts mit einem Messsystem des Koordinatenmessgeräts
e) Wiederholen des Schrittes d) an zumindest einem späteren Zeitpunkt und Ermitteln der zumindest einen weiteren Koordinate der Drehachse an dem späteren Zeitpunkt aus der zumindest einen Koordinate des zweiten Messkörper-Referenzpunkts.

Insbesondere ist der zweite Messkörper-Referenzpunkt auf der Y-Koordinate oder nahe bei der Y-Koordinate der Drehachse positioniert. In dieser Verfahrensvariante können auf einfache Art und Weise sowohl die X- als auch Y-Koordinate der Drehachse ermittelt werden. Der Begriff "nahe bei der X-/Y-Koordinate der Drehachse" bedeutet einen Abstand des Messkörper-Referenzpunkts von bis zu maximal 30 mm, vorzugsweise bis zu maximal 20 mm, am meisten bevorzugt bis zu maximal 10 mm, von der jeweiligen Koordinate der Drehachse. Weitere bevorzugte Abstände sind bis zu maximal 3 mm, vorzugsweise bis zu maximal 2 mm, am meisten bevorzugt bis zu maximal 1 mm

Das erfindungsgemäße Verfahren kann im Fall von zwei Messkörpern in analoger Weise durchgeführt werden wie in WO 2013/164344 A1 durchgeführt werden. Auf die Inhalte dieser Schrift wird daher vollumfänglich Bezug genommen.

Nachfolgend wird das Verfahren anhand von Ausführungsbeispielen beschrieben. Es zeigen:
- Fig. 1: eine erste Ausführungsform eines Adapterelements,
- Fig. 2: eine Anordnung aus dem Adapterelement aus Fig. 1 einer Drehvorrichtung und einer Zusatzeinrichtung,
- Fig. 3: eine zweite Ausführungsform eines Adapterelements,
- Fig. 4: eine Anordnung aus dem Adapterelement aus Fig. 3, einer Drehvorrichtung und drei Zusatzeinrichtungen,
- Fig. 5: eine dritte Ausführungsform eines Adapterelements mit daran angeordneter Drehvorrichtung und Zusatzeinrichtung, wodurch eine weitere Ausführungsform einer Anordnung gebildet ist,
- Fig. 6: eine vierte Ausführungsform eines Adapterelements,
- Fig. 7: eine Anordnung, aufweisend das Adapterelement aus Fig. 5 sowie eine Drehvorrichtung und zwei Zusatzeinrichtungen,
- Fig. 8: eine fünfte Ausführungsform eines Adapterelements
- Fig. 9: ein erfindungsgemäßes Koordinatenmessgerät und
- Fig. 10: einen Verfahrensablauf des erfindungsgemäßen Verfahrens.

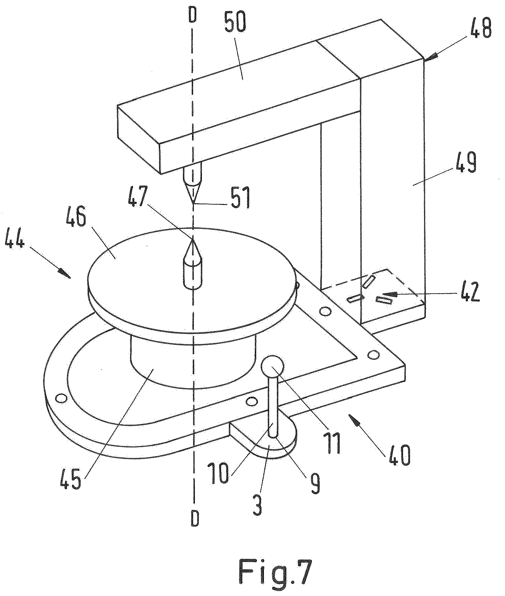

Das Adapterelement 1 besteht aus einer Grundplatte 2, an der ein seitlicher Fortsatz 3 ausgebildet ist. Im Randbereich 4 sind Durchgangslöcher 5a, 5b, 5c, 5d, 5e, 5f gebildet, die Befestigungsmittel zur Befestigung des Adapterelements 1 an einem Messtisch 201 (siehe Fig. 7) eines KMG sind. Durch die Löcher 5a-5f können Schrauben geführt werden, die in entsprechende Gewindehülsen (nicht gezeigt) in dem Messtisch 201 eingedreht werden können. Der Randbereich 4 kann zusätzlich oder alternativ zu den Befestigungsmitteln 5a-5f als Befestigungsbereich verwendet werden. Der Randbereich 4 ist weniger stark ausgeführt als ein innerer Bereich 6. An dem Randbereich 4 können Klemmen oder Spannpratzen angebracht werden, die wiederum mit dem Messtisch 201 verbunden werden können, sodass eine Klemmbefestigung des Adapterelements 1 auf dem Messtisch 201 erfolgt.

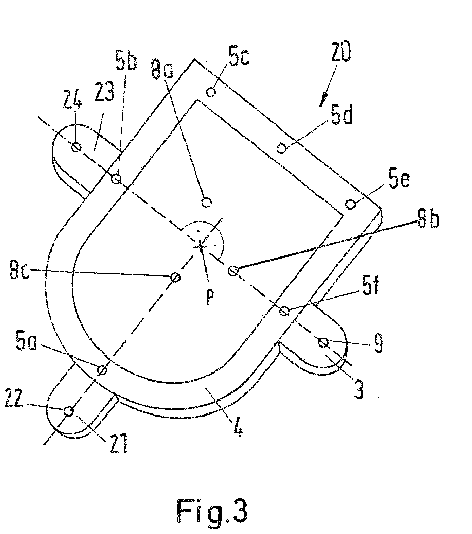

Etwa in der Mitte des Adapterelements 1 ist ein gestrichelter umrandeter Befestigungsbereich 7 angedeutet, wo eine Drehvorrichtung angeordnet werden kann. Es sind ferner die Befestigungsmittel 8a, 8b, 8c in Form von Löchern vorgesehen, die zur Befestigung einer Drehvorrichtung dienen. Beispielsweise sind die Löcher 8a-8c Durchgangslöcher. Durch die Durchgangslöcher können Schrauben zur Befestigung eines Drehtisches geführt werden. Auf der Unterseite der Adapterplatte 1 kann ein Konterelement, beispielsweise eine Mutter, vorgesehen sein. Die Befestigung einer Drehvorrichtung kann erfolgen wie beispielsweise auch in WO 2013/156074 in Fig. 3, 4 und 5 gezeigt. Alternativ können die Löcher 8a-8c mit Innengewinden versehen sein, sodass eine Befestigungsschraube jeweils in ein Loch eingedreht werden kann.

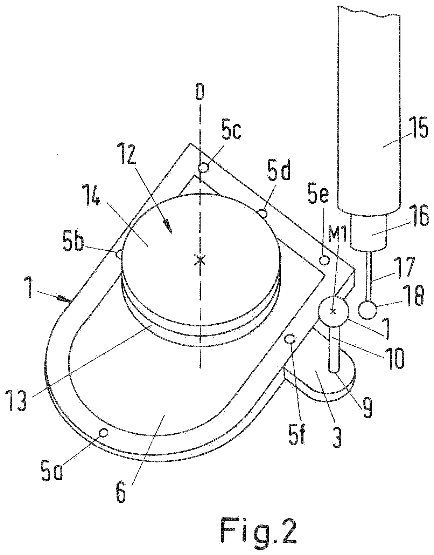

In dem seitlichen Vorsprung 3 ist als Kopplungsmittel 9 ein Sackloch gebildet, in welches ein Schaft 10 eines Antastkörpers 11 (siehe Fig. 2), der ein taktil erfassbarer Messkörper ist, eingeführt werden kann. Ein solcher Schaft ist derart passgenau auf das Sackloch 9 abgestimmt, dass er bewegungsfrei oder weitgehend bewegungsfrei in dem Loch 9 anordbar ist. Das Sackloch kann alternativ ein Innengewinde aufweisen und der Schaft ein Außengewinde. Alternativ zu einem Loch als Kopplungsmittel 9 kann auf dem Vorsprung 3 eine Dreipunktlagerung vorgesehen sein, die im allgemeinen Beschreibungsteil erläutert wurde.

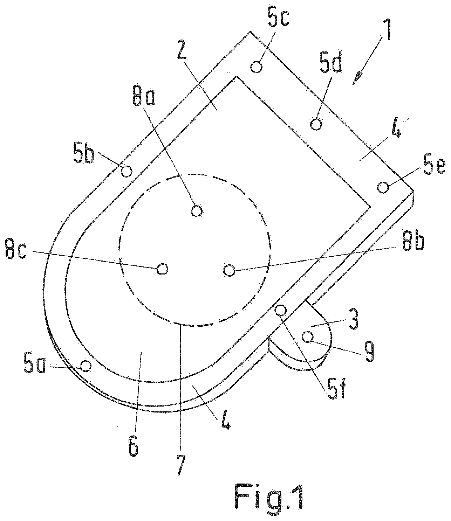

In Fig. 2 ist eine Anordnung aus dem Adapterelement 1 aus Fig. 1, der Drehvorrichtung 12, und dem Antastkörper 11, als Zusatzeinrichtung, gezeigt. Die Drehvorrichtung 12 ist ein Drehtisch mit dem Stator 13 und dem Rotor bzw. Drehteller 14. Der Stator 13 ist im Befestigungsbereich 7 auf dem Adapterelement 1 befestigt. Die in Fig. 1 gezeigten Befestigungsmittel 8a, 8b, 8c sind in Fig. 2 durch den Stator 13 verdeckt.

Der Rotor 14 ist um die virtuelle Drehachse D drehbar.

Der Antastkörper 11 ist kugelförmig und mit dem Schaft 10 verbunden, der in das Loch 9 des Adapterelements 1 eingesteckt ist. Die Kugel 11 kann mit dem Messsystem eines Koordinatenmessgeräts angetastet werden. Das Messsystem eines KMG weist die Pinole 15, den Tastkopf 16, den Taststift 17 und die Tastkugel 18 auf.

Der Antastkörper-Referenzpunkt M1 ist der Mittelpunkt der Kugel 11. Der Antastkörper-Referenzpunkt M kann durch Antasten der Kugel 11 mit der Tastkugel 18 des Koordinatenmessgeräts bestimmt werden bzw. dessen Koordinaten bestimmt werden. Die Kugel 11 kann beispielsweise mit der Tastkugel 18 gescannt werden. Die Lage der Drehtischachse D kann beispielsweise einmalig anhand von Prüfkörpern ermittelt werden, beispielsweise nach einem Verfahren wie es in WO 2013/164344 A1 und WO 02090879 A2 beschrieben ist. Aus der Lage der Drehachse D und den Koordinaten des Antastkörper-Referenzpunkts M1 kann ein relativer Bezug zwischen D und M1 hergestellt werden, insbesondere ein kürzester Abstand zwischen D und M1 ermittelt werden. Durch späteres wiederholtes Antasten der Kugel 11 und erneuter Bestimmung des Punktes M1 kann die Lage der Drehachse D relativ zu dem Punkt M1, insbesondere der Abstand, überprüft werden. Dadurch, dass die relative Lage von D und M1 durch die Ausbildung des Adapterelements 1 konstant gehalten wird, kann über die Bestimmung der Koordinaten von M1 zu einem beliebigen Zeitpunkt die Lage der Drehachse D ermittelt werden. Beispielsweise kann ein Ursprung des Gerätekoordinatensystems auf den Punkt M1 gelegt werden und es kann mittels eines Verfahrens aus WO 02090879 die Lage der Drehachse D im Gerätekoordinatensystem mit Hilfe von Prüfkörpern bestimmt werden. Zu späteren Zeitpunkten kann die Lage von M1 und damit die Lage eines Nullpunkts des Gerätekoordinatensystems neu bestimmt werden. Durch den festen Bezug von M1 zu D in einen räumlichen Bezug ist auch die Lage von D im Gerätekoordinatensystem zu den späteren Zeitpunkten in bestimmten aber nicht zwingend allen Freiheitsgraden bekannt.

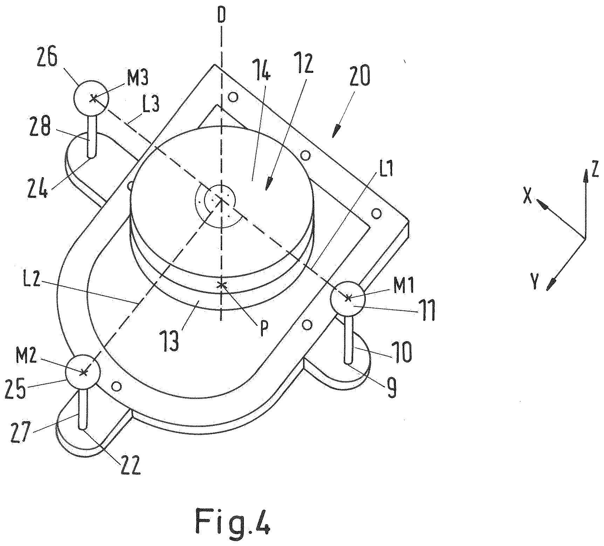

Fig. 3 zeigt eine abgewandelte Ausführungsform eines Adapterelements 20 im Vergleich zu dem Adapterelement der Fig. 1. Gleiche Bezugszeichen wie in Fig. 1 zeigen gleiche bereits in Fig. 1 erläuterte Merkmale. Im Vergleich zur Ausführungsform der Fig. 1 weist die Adapterplatte 20 weitere Kopplungsmittel zum Ankoppeln einer Zusatzeinrichtung auf. Vorgesehen sind ein weiterer Vorsprung 21 mit dem Kopplungsmittel 22, das analog zu dem Kopplungsmittel 9 ausgeführt ist, und ein dritter Vorsprung 23 mit dem Kopplungsmittel 24, das ebenfalls analog zu dem Kopplungsmittel 9 ausgestaltet ist. Antastkörper mit Schaft, die analog zu einem Antastkörper 11 mit dem Schaft 10 in Fig. 2 ausgeführt sein können, können über die Kopplungsmittel 22, 24 an die Adapterplatte 20 angekoppelt werden, sodass bis zu drei Antastkörpern angekoppelt werden können, wie in Fig. 4 gezeigt.

Die relative Lage der Kopplungsmittel 9, 22, 24 in Fig. 3 ist anhand gestrichelter Linien dargestellt. Der Punkt P bezeichnet die Stelle, an welcher eine Drehachse D einer auf der Adapterplatte 20 befestigten Drehvorrichtung 12 die Adapterplatte durchstößt, wie in Fig. 2 gezeigt. Bezogen auf Punkt P sind die Kopplungsmittel 9, 22, 24 rechtwinklig zueinander angeordnet, wie durch die gestrichelten Linien gezeigt. Daraus ergibt sich eine in Fig. 4 nachfolgend gezeigte Position von Antastkörper-Referenzpunkten.

Die in Fig. 4 gezeigte Anordnung zeigt die Adapterplatte 20 aus Fig. 2 mit einer daran befestigten Drehvorrichtung 12 und drei über die Kopplungsmittel 9, 22, 24 aus Fig. 3 angekoppelte Antastkörper 11, 25, 26, die als Kugeln ausgeführt sind und über Schäfte 10, 27, 28 verfügen, welche in die Aussparungen 9, 22, 24 eingeführt sind. Beispielsweise können Schraubverbindungen oder magnetische Verbindungen vorgesehen sein.

Der Antastkörper 11 weist den Antastkörper-Referenzpunkt M1 auf. Der Antastkörper 25 weist den Antastkörper-Referenzpunkt M2 auf, der wie beim Antastkörper 11 ein Kugelmittelpunkt ist. Ebenso weist der Antastkörper 26 den Antastkörper-Referenzpunkt M3 auf, der wiederum ein Kugelmittelpunkt ist.

Eine erste virtuelle, gestrichelt eingezeichnete Linie L1 erstreckt sich von der Drehachse D des Drehtisches 12 bis zu dem Antastkörper-Referenzpunkt M1 und steht senkrecht auf der Drehachse D. In gleicher Weise erstreckt sich die Linie L2 von dem Referenzpunkt M2 des zweiten Antastkörpers 25 zur Drehachse D und steht senkrecht zur Drehachse D. Die Linien L1 und L2 schließen wiederum einen Winkel von 90° ein. Vom dritten Antastkörper-Referenzpunkt M3 erstreckt sich die virtuelle Linie L3 bis zur Drehachse D und steht senkrecht zur Drehachse D und senkrecht zur Linie L2. Beispielsweise kann der Antastkörper-Referenzpunkt M2 relativ ortsfest zu einer X-Koordinate der Drehtischachse D positioniert sein und der Antastkörper-Referenzpunkt M1 kann relativ zur Y-Koordinate der Drehtischachse D ortsfest positioniert sein. Die X-Koordinate und die Y-Koordinate der Drehtischachse D kann im Gerätekoordinatensystem durch Einmessen der Drehtischachse ermittelt werden, wie beispielsweise in WO 02090879 A2 und WO 2013/164344 A1 beschrieben. Dort wird die Lage der Drehtischachse mit Hilfe eines auf dem Drehteller 14 positionierten Prüfkörpers offenbart. Zu späteren Zeitpunkten können die X-Koordinate und die Y-Koordinate der Drehtischachse aus der X-Koordinate des Referenzpunktes M2 und aus der Y-Koordinate des Referenzpunktes M1 ermittelt werden, ohne dass ein erneutes Einmessen der Drehachse D mit einem auf dem Drehteller befindlichen Prüfkörper 14 erfolgen muss. Ein solches Verfahren ist in WO 2013/164344 A1 detailliert beschrieben und die hier gezeigte Anordnung kann für ein solches Verfahren vorteilhaft verwendet werden.

Durch Bestimmung der Koordinaten aller drei Antastkörper-Referenzpunkte M1, M2 und M3 kann eine Referenzebene im kartesischen Koordinatensystem, beispielsweise des Koordinatenmessgeräts, ermittelt werden. Die Lage der Drehachse D ist vorzugsweise senkrecht zu dieser Referenzebene und wird als konstant zu dieser Referenzebene angenommen. Durch erneutes Bestimmen der Lage der Referenzebene zu einem oder mehreren späteren Zeitpunkten kann eine Änderung der Lage der Ebene ermittelt werden und damit eine Änderung der Lage der Drehachse D (Verkippung) im Koordinatensystem ermittelt werden.

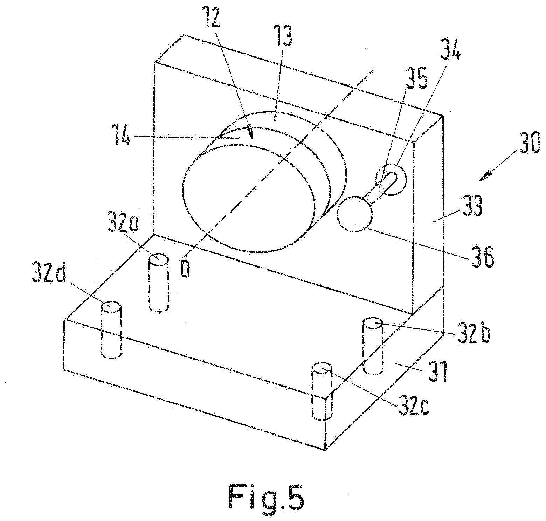

Fig. 5 zeigt ein Adapterelement 30, das winkelförmig ausgestaltet ist. Das Adapterelement 30 weist den Schenkel 31 auf, an dem Befestigungsmittel 32a, 32b, 32c und 32d in Form von Durchgangslöchern vorgesehen sind. Mit Hilfe dieser Befestigungsmittel 32 ist der Schenkel 31 auf einem Messtisch 201 eines Koordinatenmessgeräts befestigbar.

An dem senkrecht zum Schenkel 31 stehenden Schenkel 33 ist die Drehvorrichtung 12 befestigt, die analog ausgestaltet ist wie die in vorigen Abbildungen gezeigte Drehvorrichtung. Neben der Drehvorrichtung 12 ist das Kopplungsmittel 34 vorgesehen, das analog ausgestaltet ist wie die Kopplungsmittel 9, 22 und 24 in Fig. 1 bis 3. Über den Schaft 35 ist der kugelförmige Antastkörper 36 angekoppelt, in analoger Weise wie in Fig. 2 und 4.

Mit der in Fig. 5 gezeigten Anordnung und dem Adapterelement 30 kann eine Drehvorrichtung so in den Messraum eines Koordinatenmessgeräts eingebracht werden, dass die Drehachse D in der X-Y-Ebene eines Gerätekoordinatensystems liegt.

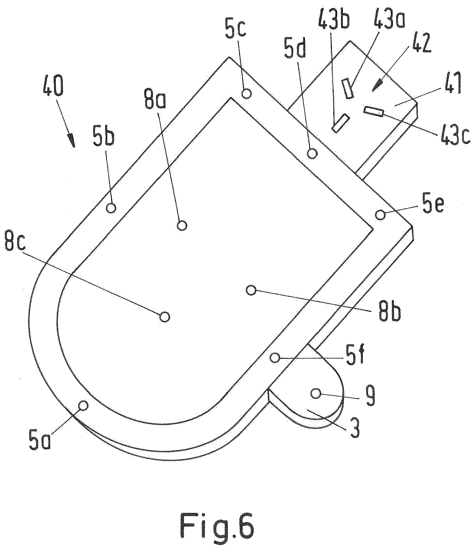

Fig. 6 zeigt eine Weiterbildung des Adapterelements 1 aus Fig. 1, wobei identische Bezugszeichen die gleiche Bedeutung haben wie in Fig. 1. An einem weiteren Vorsprung 41 ist ein weiteres Kopplungsmittel 42 vorgesehen, an dem eine Zubehörvorrichtung angekoppelt werden kann, wie in nachfolgender Fig. 7 noch gezeigt. Das Kopplungsmittel 42 ist in Form von drei Vertiefungen 43a-43c ausgestaltet, die in dem Vorsprung 41 ausgebildet sind. Die Anordnung von Vertiefungen 43a-43c kann mit einer Anordnung komplementär geformter und relativ zueinander angeordneter Erhöhungen, die ein weiteres Kopplungsmittel bilden, zusammenwirken, um eine Verbindung zu einer Zubehörvorrichtung herzustellen. An der Zubehörvorrichtung sind entsprechend die erwähnten drei Erhöhungen vorgesehen.

Fig. 7 zeigt das Adapterelement 40 mit einer Drehvorrichtung 44, die auf der Adapterplatte 40 befestigt ist. Die Drehvorrichtung 44 weist den Stator 45 und den Drehteller 46 auf. Auf dem Drehteller 46 ist eine Spitze 47 zum Halten eines Werkstücks befestigt. Es handelt sich hiermit um eine auf der Drehachse D zentrierten, feststehenden Spitze auf dem Drehteller 46 (feststehend relativ zum Drehteller 46, aber rotierbar um die Achse D).

Weiterhin ist an der Adapterplatte 40 ein bereits zuvor erläuterter Antastkörper 11 angebracht.

Weiterhin ist über das Kopplungsmittel 42 ein Gegenhalter 48 angekoppelt. Die Säule 49 des Gegenhalters ist transparent dargestellt, sodass das Kopplungsmittel 42 in Fig. 7 sichtbar ist. Am unteren Ende der Säule 49 ist ein zum Kopplungsmittel 42 komplementäres Kopplungsmittel vorgesehen, das zuvor erläutert wurde und hier nicht gezeigt ist.

Der Gegenhalter 48 weist weiterhin den Querträger oder Galgen 50 auf, an dessen Ende die rotierbare Spitze 51 angebracht ist, welche nach unten weist. Zwischen der Spitze 47 auf dem Drehteller 46 und der Spitze 51 kann ein Werkstück eingespannt sein. Der Galgen ist in Richtung der Drehachse D verschiebbar, sodass der Abstand zwischen der Spitze 47 und der Spitze 51 veränderlich ist. Der Verschiebemechanismus ist nicht näher dargestellt.

Es ist erforderlich, dass beide Spitzen 47 und 51 auf der Drehachse D liegen bzw. kollinear zur Drehachse D sind. Bei der Spitze 47 wird dies durch exakte Positionierung auf dem Drehteller 46 erreicht. Bei der exakten Positionierung der Spitze 51 auf der Drehachse D ist das Adapterelement 40 mit dem Kopplungsmittel 42 hilfreich. Beispielsweise ist der Drehtisch 44 unbeweglich auf der Adapterplatte 40 befestigt. Anschließend kann der Gegenhalter 48 über das Kopplungsmittel 42 (und ein nicht gezeigtes komplementäres Kopplungsmittel am Gegenhalter selbst) angekoppelt werden. Danach kann die Gegenhalterspitze 51 genau auf der Drehachse D des Drehtisches 44 positioniert werden. Beispielsweise ist die Spitze 51 an dem Gegenhalter 48 in ihrer Position und/oder Orientierung verstellbar relativ zu der Gegenhaltersäule 49, was auf verschiedene, hier nicht weiter erläuterte Art und Weise geschehen kann. Durch das Kopplungsmittel 42 wird eine reproduzierbare Ankopplung des Gegenhalters 48 an der Adapterplatte 40 erzielt. Es kann also der Gegenhalter 48 abgenommen und in reproduzierbarer Art und Weise zu einem späteren beliebigen Zeitpunkt angekoppelt werden, wobei die Lage der Spitze 51 auf der Drehachse exakt wieder hergestellt wird. Es kann somit im Messbetrieb des Drehtisches 44 entschieden werden, ob ein Gegenhalter als Zubehörvorrichtung vorhanden sein soll oder nicht. Wird der Gegenhalter nicht gebraucht, kann er, da er eine relativ große Störkontur darstellen kann und den Messbetrieb behindern kann, entfernt werden. Zu einem späteren Zeitpunkt kann der Gegenhalter 48 wieder angekoppelt werden.

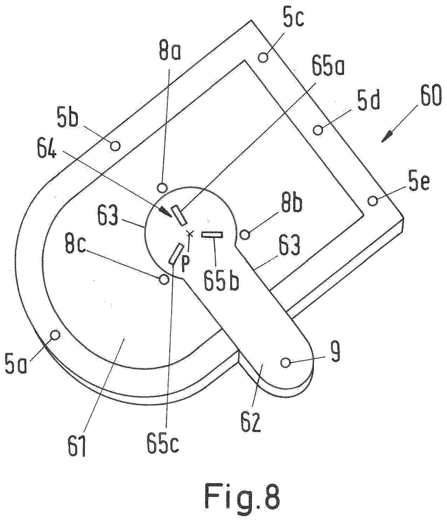

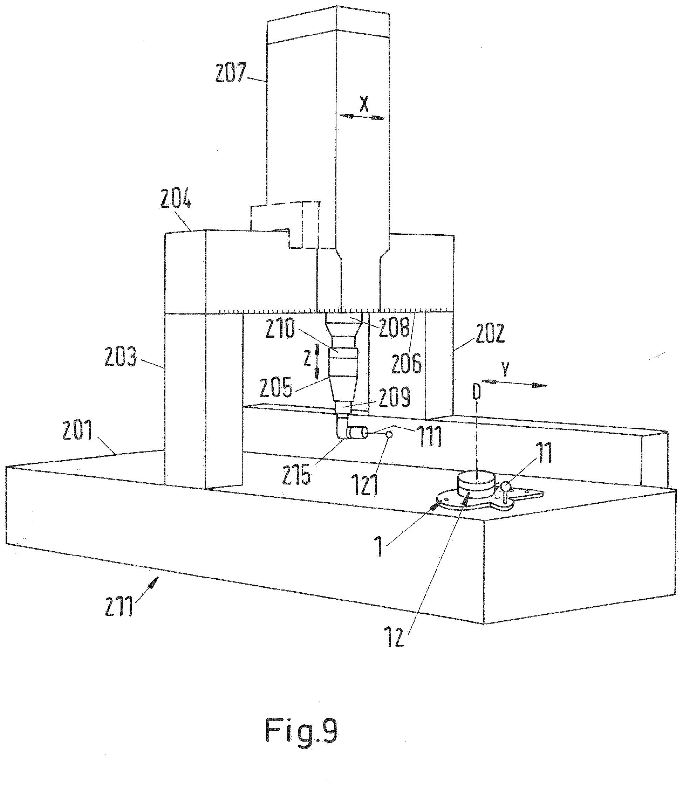

Fig. 8 zeigt eine zweiteilige Adapterplatte 60, die in ihrer Formgebung ähnlich ist wie die Adapterplatte aus Fig. 1. Der erste Teil 61 weist die Befestigungsmittel 5a-5e zur Befestigung der Platte 60 auf einem Messtisch 201 eines Koordinatenmessgeräts 211 (siehe Fig. 9) auf. Der zweite Teil 62 ist passgenau in einer Aussparung 63 in dem ersten Teil 61 eingesetzt. Das zweite Teil 62 kann von dem ersten Teil trennbar sein oder dauerhaft mit dem ersten Teil verbunden sein. Zwischen den beiden Teilen 61, 62 können Verbindungsmittel vorgesehen sein. Die Verbindung passend ausgeführt. Eine Ausdehnung des Teils 61 ist möglich sein, ohne Spannungen entstehen zu lassen. Idealerweise ist 62 an einer einzigen Stelle, z.B. in der Mitte des Drehtischs befestigt.

Das zweite Teil 62 ist aus einem temperaturinvarianten Material gefertigt und weist einen geringeren Ausdehnungskoeffizienten auf als das Material des ersten Teils 61. Beispielsweise ist das Teil 62 aus einer Eisen-Nickel-Legierung mit 64 % Eisen und 36 % Nickel gefertigt.

In bzw. an dem zweiten Teil 62 ist das Kopplungsmittel 9 vorgesehen, das bereits anhand voriger Figuren beschrieben wurde. Ferner sind an dem Teil 61 Befestigungsmittel 8a, 8b, 8c vorgesehen, die zur Befestigung eines Drehtisches dienen und bereits anhand vorheriger Figuren erläutert wurden. Im Unterschied zu vorangehend beschriebenen Ausführungsformen weist die Adapterplatte 60 an dem zweiten Teil 62 aus temperaturinvariantem Material auch ein Kopplungsmittel 64 zum Ankoppeln einer Drehvorrichtung auf. Das Kopplungsmittel 64 ist analog gestaltet wie ein Kopplungsmittel 42 in Fig. 6 und weist die Vertiefung en 65a, 65b und 65c auf. In diese Vertiefungen können komplementär ausgestaltete und relativ zueinander angeordnete Erhöhungen eingreifen, die an der Unterseite einer Drehvorrichtung vorgesehen sind. Dadurch kann eine Drehvorrichtung an der Adapterplatte 60 angeordnet werden, bei der Ausbildung dieses Kopplungsmittels auch in reproduzierbarer Position und/oder Orientierung.

Das zweite Teil 62, das einen Bereich des Adapterelements 60 bildet, erstreckt sich von dem Ort, an dem das Kopplungsmittel 9 ausgebildet ist, bis zu dem Ort, an welchem die Drehachse D einer an der Adapterplatte 60 befestigten Drehvorrichtung das Adapterelement trifft. Dieser Ort ist mit dem Punkt P bezeichnet. In Fig. 4 ist gezeigt, dass eine Drehachse D die Adapterplatte 60 in Punkt P schneidet. Ferner sind, wie erläutert, Befestigungsmittel 8a-8c und Kopplungsmittel 64 für eine Drehvorrichtung in dem temperaturinvarianten Bereich 62 vorgesehen.

Das in Fig. 5 dargestellte Koordinatenmessgerät (KMG) 211 in Portalbauweise weist einen Messtisch 201 auf, über der Säulen 202, 203 in Y-Richtung eines kartesischen Koordinatensystems beweglich angeordnet sind. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht näher dargestellte Elektromotoren verursachen die Linearbewegung der Säulen 202, 203 in Y-Richtung, entlang der Y-Bewegungs-Achse. Dabei ist z. B. jeder der beiden Säulen 202, 203 ein Elektromotor zugeordnet. Der Querträger 204 ist mit einem Querschlitten 207 kombiniert, welcher luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querträgers 204 in X-Richtung, d.h. entlang der X-Bewegungs-Achse, wird durch einen weiteren Elektromotor angetrieben. An dem Querschlitten 207 ist eine in vertikaler Richtung bewegliche Pinole 208 gelagert, die an ihrem unteren Ende über eine Montageeinrichtung 210 und eine Drehvorrichtung 205 mit einer Koordinatenmesseinrichtung 209 verbunden ist. Die Koordinatenmesseinrichtung 209 weist ist einen abgewinkelten Tastkopf 215 auf, an dem ein Taststift 111 mit Tastkugel 121 abnehmbar angeordnet ist. Die Koordinatenmesseinrichtung 209 kann angetrieben durch einen weiteren Elektromotor relativ zu dem Querschlitten 207 in Z-Richtung, entlang der Z-Bewegungs-Achse, des kartesischen Koordinatensystems bewegt werden. Durch die Elektromotoren des KMG kann der Tastkopf 209 in dem Bereich unterhalb des Querträgers 204 in nahezu beliebige Positionen bewegt werden. Ferner kann die Drehvorrichtung 205 den Tastkopf 215 um die Z-Achse drehen, sodass der Taststift 111 in unterschiedliche Richtungen ausgerichtet werden kann. Nicht dargestellt ist eine Steuerung, die die Bewegung der beweglichen Teile des KMG entlang der Bewegungs-Achsen steuert. Die Steuerung ist eingerichtet zur Durchführung einer oder mehrerer der im allgemeinen Beschreibungsteil erläuterten Schritte.

An dem Messtisch 201 des Koordinatenmessgeräts 211 ist die in Fig. 1 gezeigte Adapterplatte 1 befestigt. Eine Antastkugel 11, die in Fig. 2 erläutert wurde, ist angekoppelt. Auf der Adapterplatte 1 ist der Drehtisch 12 befestigt, sodass insgesamt die in Fig. 2 gebildete Anordnung hergestellt ist. Es ist selbstverständlich, dass jedes Adapterelement an jede Anordnung, die bereits zuvor beispielhaft und im allgemeinen Beschreibungsteil erläutert wurden, an dem Koordinatenmessgerät 211 bzw. dessen Messtisch 201 angebracht werden kann.

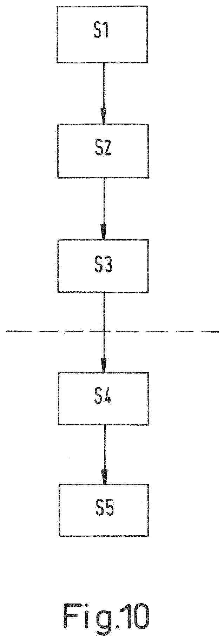

In Fig. 10 ist ein erfindungsgemäßer Verfahrensablauf schematisch dargestellt. Die nachfolgend genannten Verfahrensschritte wurden auch teilweise bereits in der vorangehenden Beschreibung erläutert. In Schritt S1 wird zunächst eine Koordinate eines Antastkörper-Referenzpunkts M1 mit dem Messsystem des Koordinatenmessgeräts 211 ermittelt. Dies kann anhand Fig. 9 erläutert werden: Mit der Tastkugel 121 wird die Kugel 11 angetastet und der Kugelmittelpunkt M1 (siehe Fig. 2) als Referenzpunkt bestimmt. Die Koordinaten X, Y und Z des Punktes M1 sind somit durch Antasten der Kugel 11 ermitteltbar.

In einem weiteren Schritt S2 wird zumindest eine Koordinate der Drehachse D bestimmt, beispielsweise die X- und Y-Koordinaten der Drehachse D auf Z-Höhe des Antastkörper-Referenzpunkts M1, also des Mittelpunkts der Kugel 11. Dadurch, dass die Koordinaten des Referenzpunkts M1 und der Drehachse D auf Höhe des Referenzpunkts M1 bekannt sind, ist auch der Abstand des Punkts M1 von der Drehachse D bekannt (kürzester Abstand). Zur Bestimmung der erwähnten Koordinaten der Drehachse D kann ein Verfahren verwendet werden, das an sich aus WO 2013/164344 A1 und WO 02090879 A2 bekannt ist. Hierbei wird zur Lagestimmung der Drehachse ein Prüfkörper auf dem Drehteller des Drehtisches positioniert und in verschiedenen Drehpositionen vermessen. Für Einzelheiten wird auf die zitierten Dokumente verwiesen.

Die Schritte S1 und S2 können in beliebiger Reihenfolge durchgeführt werden.

In Schritt S3 wird Schritt S1 wiederholt, also die Lage des Referenzpunktes M1 durch Antasten der Kugel 11 erneut bestimmt. Da die relative Position von dem Referenzpunkt M1 und der Drehachse D, hier der Abstand zwischen beiden, bekannt ist, ist zu dem späteren Zeitpunkt durch Antasten der Kugel 11 und Ermitteln der Lage des Referenzpunkts M1 auch gleichzeitig die Lage der Drehachse D bestimmbar, welche hier die X- und Y-Position auf Höhe des Referenzpunkts M1 ist. Es ist daher zu späteren Zeitpunkten nicht mehr erforderlich, eine Drehachse mit einem gesonderten Prüfkörper erneut einzumessen, wie vorangehend an Schritt S2 mit Bezug auf zitierte Dokumente erläutert.

Das Verfahren kann so erweitert werden, dass anhand eines weiteren Antastkörpers 25, gezeigt in Fig. 4, in Schritt S4 ein weiterer Antastkörper-Referenzpunkt M2 bestimmt wird. Nachdem die Position des Referenzpunktes M2 bekannt ist, ist auch die relative Position bzw. in diesem Fall der kürzeste Abstand von M2 zu der Drehachse D, die in Schritt S2 eingemessen wurde, bekannt. Dies stellt eine zusätzliche Information zur Bestimmung der Lage der Drehachse D dar. Zu einem späteren Zeitpunkt kann in Schritt S5 durch Antasten der Kugel 25 der Referenzpunkt M2 erneut bestimmt werden und hieraus Informationen über die Lage der Drehachse D erhalten werden. Insbesondere wird, wie vorangehend erläutert, eine Adapterplatte 20 mit Antastkörpern 11 und 25 aus Fig. 4 so positioniert, dass der Punkt M1 auf der X-Koordinate der Drehachse D und der Punkt M2 auf der Y-Koordinate der Drehachse D positioniert sind. Dadurch können in den Schritten S3 und S5 direkt die X-Koordinate und die Y-Koordinate der Drehachse D zu einem beliebigen späteren Zeitpunkt ermittelt werden, wie in WO 2013/164344 A1 beschrieben.

## Patentansprüche

1. Anordnung, aufweisend
ein Adapterelement (1; 20; 30; 40) zur Montage einer Drehvorrichtung (12; 44) mit einer Drehachse (D) im Messraum eines Koordinatenmessgeräts (211), aufweisend
- zumindest ein erstes Befestigungsmittel (5a, 5b, 5c, 5d, 5e, 5f; 32a, 32b, 32c, 32d) und/oder einen ersten Befestigungsbereich (4) zur Befestigung des Adapterelements in dem Messraum,
- zumindest ein zweites Befestigungsmittel (8a, 8b, 8c) und/oder einen zweiten Befestigungsbereich (7) zur Befestigung der Drehvorrichtung an dem Adapterelement,
wobei das Adapterelement zumindest ein Kopplungsmittel (9, 22, 24, 42) zum Ankoppeln einer Zusatzeinrichtung (12, 25, 26, 48) aufweist,
wobei das Kopplungsmittel an dem Adapterelement derart benachbart zu dem zweiten Befestigungsmittel und/oder dem einen zweiten Befestigungsbereich für die Drehvorrichtung angeordnet ist, dass die Zusatzeinrichtung an dem Adapterelement im angekoppelten Zustand neben der Drehvorrichtung positionierbar ist,
eine Drehvorrichtung (12; 44), die an dem Adapterelement befestigt ist,
zumindest eine Zusatzeinrichtung (11, 25, 26, 48), die an das Adapterelement angekoppelt ist und neben der Drehvorrichtung positioniert ist, und die ausgewählt ist aus einem Messkörper (11, 25, 26), einem Sensorhalter oder einer Zubehörvorrichtung (48) für die Drehvorrichtung (12; 44).

2. Anordnung nach Anspruch 1, wobei die Zusatzeinrichtung ausgewählt ist aus einem Messkörper (11, 25, 26), einem Sensorhalter und/oder einer Zubehörvorrichtung (48) für die Drehvorrichtung.

3. Anordnung nach Anspruch 1 oder 2, wobei das Adapterelement als Kopplungsmittel aufweist:
ein erstes Kopplungsmittel (9) zum Ankoppeln eines ersten Messkörpers,
ein zweites Kopplungsmittel (22) zum Ankoppeln eines zweiten Messkörpers.

4. Anordnung nach Anspruch 3, wobei das Adapterelement als Kopplungsmittel aufweist:
ein drittes Kopplungsmittel (24) zum Ankoppeln eines dritten Messkörpers.

5. Anordnung nach einem der vorangehenden Ansprüche, wobei das Adapterelement als Kopplungsmittel aufweist:
ein viertes Kopplungsmittel (42) zum Ankoppeln einer Zubehörvorrichtung für die Drehvorrichtung.

6. Anordnung nach einem der vorangehenden Ansprüche, wobei die Zubehörvorrichtung eine Vorrichtung (48) zum Halten eines Werkstücks ist.

7. Anordnung nach einem der vorangehenden Ansprüche, wobei das Adapterelement (60) aus einem temperaturinvarianten Material besteht oder einen oder mehrere Bereiche (62) aus einem temperaturinvarianten Material aufweist.

8. Anordnung nach einem der vorangehenden Ansprüche, wobei das Adapterelement (60) ein Kopplungsmittel (64) zum Ankoppeln der Drehvorrichtung an das Adapterelement in reproduzierbarer Position und/oder Orientierung aufweist.

9. Anordnung nach einem der Ansprüche 1 - 8, aufweisend, als Zusatzeinrichtungen,
- einen ersten Messkörper (11) und
- einen zweiten Messkörper (25), wobei
eine erste virtuelle Linie (L1), die sich von der Drehachse (D) einer an der Adapterelement befestigten Drehvorrichtung (12) bis zu einem Messkörper-Referenzpunkt (M1) des ersten Messkörpers (11) erstreckt und senkrecht zur Drehachse (D) ist, und
eine zweite virtuelle Linie (L2), die sich von der Drehachse (D) bis zu einem Messkörper-Referenzpunkt (M2) des zweiten Messkörpers (25) erstreckt und senkrecht zur Drehachse (D) ist,
einen Winkel von 90° oder im Wesentlichen 90° einschließen.

10. Anordnung nach einem der vorangehenden Ansprüche, wobei die Drehvorrichtung ein einachsiger, ein zweiachsiger, oder ein n-achsiger Drehtisch, wobei n eine ganze Zahl ist, ein Drehgelenk mit einer Drehachse, oder ein Dreh-Schwenk-Gelenk mit zwei oder mehr Drehachsen ist.

11. Koordinatenmessgerät, aufweisend eine Anordnung nach einem der Ansprüche 1-10.

12. Verfahren zur Bestimmung der Lage einer Drehachse im Gerätekoordinatensystem eines Koordinatenmessgeräts (211), wobei eine Anordnung nach einem der Ansprüche 1-10 in einem Koordinatenmessgerät (211) bereitgestellt wird, wobei
- das Adapterelement (20) der Anordnung in dem Messraum des Koordinatenmessgeräts (211) befestigt ist,
- als Zusatzeinrichtung der Anordnung ein erster Messkörper (11), der einen relativ zur Drehachse der Drehvorrichtung ortsfest positionierten ersten Messkörper-Referenzpunkt (M1) aufweist, an das Adapterelement angekoppelt ist,
und das Verfahren die Schritte umfasst:
a) Ermitteln (S1) zumindest einer Koordinate des ersten Messkörper-Referenzpunkts (M1) mit einem Messsystem (215, 111, 121) des Koordinatenmessgeräts (211)
b) Ermitteln (S2) zumindest einer Koordinate der Drehachse (D)
c) Wiederholen des Schrittes a) an zumindest einem späteren Zeitpunkt und Ermitteln der zumindest einen Koordinate der Drehachse (D) an dem späteren Zeitpunkt aus der zumindest einen Koordinate des ersten Messkörper-Referenzpunkts (M1).

13. Verfahren nach Anspruch 12, wobei der erste Messkörper-Referenzpunkt (M1) auf der X-Koordinate, oder nahe bei der X-Koordinate der Drehachse (D) positioniert ist.

14. Verfahren nach Anspruch 12 oder 13, wobei die Anordnung aufweist:
- einen zweiten Messkörper (25), der einen relativ zur Drehachse (D) der Drehvorrichtung (12) ortsfest positionierten zweiten Messkörper-Referenzpunkt (M2) aufweist, und der an das Adapterelement (20) angekoppelt ist,
und das Verfahren die Schritte umfasst:
d) Ermitteln (S4) zumindest einer Koordinate des zweiten Messkörper-Referenzpunkts (M2) mit einem Messsystem (215, 111, 121) des Koordinatenmessgeräts (211)
e) Wiederholen (S5) des Schrittes d) an zumindest einem späteren Zeitpunkt und Ermitteln der zumindest einen weiteren Koordinate der Drehachse (D) an dem späteren Zeitpunkt aus der zumindest einen Koordinate des zweiten Messkörper-Referenzpunkts (M2).

15. Verfahren nach Anspruch 14, wobei der zweite Messkörper-Referenzpunkt (M2) auf der Y-Koordinate, oder nahe bei der Y-Koordinate der Drehachse (D) positioniert ist.

## Claims

1. Arrangement having
an adapter element (1; 20; 30; 40) for assembling a rotary apparatus (12; 44) having an axis of rotation (D) in the measurement space of a coordinate measuring machine (211), said adapter element having
- at least one first fastening means (5a, 5b, 5c, 5d, 5e, 5f; 32a, 32b, 32c, 32d) and/or a first fastening region (4) for fastening the adapter element in the measurement space,
- at least one second fastening means (8a, 8b, 8c) and/or a second fastening region (7) for fastening the rotary apparatus to the adapter element,
wherein
the adapter element has at least one coupling means (9, 22, 24, 42) for coupling an additional device (12, 25, 26, 48),
wherein the coupling means is arranged on the adapter element, adjacently to the second fastening means and/or the one second fastening region for the rotary apparatus, in such a way that, in the coupled state, the additional device is positionable on the adapter element next to the rotary apparatus,
a rotary apparatus (12; 44), which is fastened to the adapter element,
at least one additional device (11, 25, 26, 48), which is coupled to the adapter element and positioned next to the rotary apparatus and which is selected from a measuring body (11, 25, 26), a sensor holder or an accessory apparatus (48) for the rotary apparatus (12; 44).

2. Arrangement according to Claim 1, wherein the additional device is selected from a measuring body (11, 25, 26), a sensor holder and/or an accessory apparatus (48) for the rotary apparatus.

3. Arrangement according to Claim 1 or 2, wherein the adapter element has as a coupling means:
a first coupling means (9) for coupling a first measuring body,
a second coupling means (22) for coupling a second measuring body.

4. Arrangement according to Claim 3, wherein the adapter element has as a coupling means:
a third coupling means (24) for coupling a third measuring body.

5. Arrangement according to any one of the preceding claims, wherein the adapter element has as a coupling means:
a fourth coupling means (42) for coupling an accessory apparatus for the rotary apparatus.

6. Arrangement according to any one of the preceding claims, wherein the accessory apparatus is an apparatus (48) for holding a workpiece.

7. Arrangement according to any one of the preceding claims, wherein the adapter element (60) consists of a temperature-invariant material or has one or more regions (62) made of a temperature-invariant material.

8. Arrangement according to any one of the preceding claims, wherein the adapter element (60) has a coupling means (64) for coupling the rotary apparatus to the adapter element in a reproducible position and/or orientation.

9. Arrangement according to any one of Claims 1-8, having, as additional devices,
- a first measuring body (11) and
- a second measuring body (25), wherein
a first virtual line (L1), which extends from the axis of rotation (D) of a rotary apparatus (12) that is fastened to the adapter element to a measuring body reference point (M1) of the first measuring body (11) and which is perpendicular to the axis of rotation (D), and
a second virtual line (L2), which extends from the axis of rotation (D) to a measuring body reference point (M2) of the second measuring body (25) and which is perpendicular to the axis of rotation (D), include an angle of 90° or substantially 90°.

10. Arrangement according to any one of the preceding claims, wherein the rotary apparatus is a single axis, two axis or n axis rotary table, where n is an integer, a rotary joint with an axis of rotation or a rotary swivel joint with two or more axes of rotation.

11. Coordinate measuring machine, having an arrangement according to any one of Claims 1-10.

12. Method for determining the positional situation of an axis of rotation in the machine coordinate system of a coordinate measuring machine (211), wherein an arrangement according to any one of Claims 1-10 is provided in a coordinate measuring machine (211), wherein
- the adapter element (20) of the arrangement is fastened in the measurement space of the coordinate measuring machine (211),
- a first measuring body (11) that has a first measuring body reference point (M1) which is positioned in a stationary manner relative to the axis of rotation of the rotary apparatus is coupled to the adapter element, said first measuring body being an additional device of the arrangement,
and the method comprises the following steps:
a) ascertaining (S1) at least one coordinate of the first measuring body reference point (M1) using a measurement system (215, 111, 121) of the coordinate measuring machine (211),
b) ascertaining (S2) at least one coordinate of the axis of rotation (D),
c) repeating step a) at at least one subsequent instant and ascertaining the at least one coordinate of the axis of rotation (D) at the subsequent instant from the at least one coordinate of the first measuring body reference point (M1).

13. Method according to Claim 12, wherein the first measuring body reference point (M1) is positioned on the X-coordinate or near the X-coordinate of the axis of rotation (D).

14. Method according to Claim 12 or 13, wherein the arrangement has:
- a second measuring body (25) that has a second measuring body reference point (M2) which is positioned in a stationary manner relative to the axis of rotation (D) of the rotary apparatus (12) and that is coupled to the adapter element (20),
and the method comprises the following steps:
d) ascertaining (S4) at least one coordinate of the second measuring body reference point (M2) using a measurement system (215, 111, 121) of the coordinate measuring machine (211),
e) repeating (S5) step d) at at least one subsequent instant and ascertaining the at least one further coordinate of the axis of rotation (D) at the subsequent instant from the at least one coordinate of the second measuring body reference point (M2).

15. Method according to Claim 14, wherein the second measuring body reference point (M2) is positioned on the Y-coordinate or near the Y-coordinate of the axis of rotation (D).

## Revendications

1. Agencement comportant
un élément adaptateur (1 ; 20 ; 30 ; 40) destiné au montage d'un dispositif rotatif (12 ; 44) possédant un axe de rotation (D) dans la chambre de mesure d'un appareil de mesure de coordonnées (211), comportant
- au moins un premier moyen de fixation (5a, 5b, 5c, 5d, 5e, 5f ; 32a, 32b, 32c, 32d) et/ou une première zone de fixation (4) pour fixer l'élément adaptateur dans la chambre de mesure,
- au moins un deuxième moyen de fixation (8a, 8b, 8c) et/ou une deuxième zone de fixation (7) pour fixer le dispositif rotatif à l'élément adaptateur,
dans lequel l'élément adaptateur comporte au moins un moyen d'accouplement (9, 22, 24, 42) pour accoupler un dispositif auxiliaire (12, 25, 26, 48),
dans lequel le moyen d'accouplement est disposé sur l'élément adaptateur de manière adjacente au deuxième moyen de fixation et/ou à la deuxième zone de fixation du dispositif rotatif de manière à ce que le dispositif auxiliaire puisse être positionné à l'état accouplé sur l'élément adaptateur à côté du dispositif rotatif,
un dispositif rotatif (12 ; 44) fixé à l'élément adaptateur,
au moins un dispositif auxiliaire (11, 25, 26, 48), qui est accouplé à l'élément adaptateur et positionné à côté du dispositif rotatif, et qui est sélectionné parmi un corps de mesure (11, 25, 26), un support de capteur ou un dispositif accessoire (48) destiné au dispositif rotatif (12 ; 44).

2. Agencement selon la revendication 1, dans lequel le dispositif auxiliaire est sélectionné parmi un corps de mesure (11, 25, 26), un support de capteur et/ou un dispositif accessoire (48) destiné au dispositif rotatif.

3. Agencement selon la revendication 1 ou 2, dans lequel l'élément adaptateur comporte en tant que moyen d'accouplement :
un premier moyen d'accouplement (9) pour accoupler un premier corps de mesure,
un deuxième moyen d'accouplement (22) pour accoupler un deuxième corps de mesure.

4. Agencement selon la revendication 3, dans lequel l'élément adaptateur comprend en tant que moyen d'accouplement :
un troisième moyen d'accouplement (24) pour accoupler un troisième corps de mesure.

5. Agencement selon l'une des revendications précédentes, dans lequel l'élément adaptateur comprend en tant que moyen d'accouplement :
un quatrième moyen d'accouplement (42) pour accoupler un dispositif accessoire destiné au dispositif rotatif.

6. Agencement selon l'une des revendications précédentes, dans lequel le dispositif accessoire est un dispositif (48) destiné à maintenir une pièce à usiner.

7. Agencement selon l'une des revendications précédentes, dans lequel l'élément adaptateur (60) est constitué d'un matériau insensible à la température ou comporte une ou plusieurs régions (62) composées d'un matériau insensible à la température.

8. Agencement selon l'une des revendications précédentes, dans lequel l'élément adaptateur (60) comprend un moyen d'accouplement (64) pour accoupler le dispositif rotatif à l'élément adaptateur dans une position et/ou une orientation reproductible.

9. Agencement selon l'une des revendications 1 à 8, comportant, en tant qu'équipements supplémentaires,
- un premier corps de mesure (11) et
- un deuxième corps de mesure (25),
dans lequel une première ligne virtuelle (L1) s'étendant depuis l'axe de rotation (D) d'un dispositif rotatif (12) fixé à l'élément adaptateur jusqu'à un point de référence de corps de mesure (M1) du premier corps de mesure (11) est perpendiculaire à l'axe de rotation (D), et
une deuxième ligne virtuelle (L2) s'étendant depuis l'axe de rotation (D) jusqu'à un point de référence de corps de mesure (M2) du deuxième corps de mesure (25) et perpendiculaire à l'axe de rotation (D),
forment entre elles un angle de 90° ou sensiblement de 90°.

10. Agencement selon l'une des revendications précédentes, dans lequel le dispositif rotatif est un plateau rotatif uniaxial, biaxial ou n-axial, où n est un nombre entier, une articulation tournante possédant un axe de rotation, ou une articulation tournante et pivotante possédant deux axes de rotation ou plus.

11. Appareil de mesure de coordonnées comprenant un agencement selon l'une des revendications 1-10.

12. Procédé de détermination de la position d'un axe de rotation dans le système de coordonnées d'appareil d'un appareil de mesure de coordonnées (211), dans lequel un agencement selon l'une des revendications 1-10 est prévu dans un appareil de mesure de coordonnées (211), dans lequel
- l'élément adaptateur (20) de l'agencement est fixé dans l'espace de mesure de l'appareil de mesure de coordonnées (211),
- un premier corps de mesure (11), qui possède un premier point de référence de corps de mesure (M1) positionné de manière stationnaire par rapport à l'axe de rotation du dispositif rotatif, est accouplé à l'élément adaptateur en tant que dispositif auxiliaire de l'agencement,
et le procédé comprend les étapes suivantes :
a) déterminer (S1) au moins une coordonnée du premier point de référence du corps de mesure (M1) au moyen d'un système de mesure (215, 111, 121) de l'appareil de mesure de coordonnées (211),
b) déterminer (S2) au moins une coordonnée de l'axe de rotation (D),
c) répéter l'étape a) à au moins un instant ultérieur et déterminer ladite au moins une coordonnée de l'axe de rotation (D) audit instant ultérieur à partir de ladite au moins une coordonnée du premier point de référence de corps de mesure (M1).

13. Procédé selon la revendication 12, dans lequel le premier point de référence de corps de mesure (M1) est positionné sur la coordonnée X ou à proximité de la coordonnée X de l'axe de rotation (D).

14. Procédé selon la revendication 12 ou 13, dans lequel l'agencement comprend :
- un deuxième corps de mesure (25) qui possède un deuxième point de référence de corps de mesure (M2) positionné de manière fixe par rapport à l'axe de rotation (D) du dispositif rotatif (12) et qui est accouplé à l'élément adaptateur (20),
et le procédé comprend les étapes suivantes :
d) déterminer (S4) au moins une coordonnée du deuxième point de référence de corps de mesure (M2) au moyen d'un système de mesure (215, 111, 121) de l'appareil de mesure de coordonnées (211),
e) répéter (S5) l'étape d) à au moins un instant ultérieur et déterminer ladite au moins une autre coordonnée de l'axe de rotation (D) audit instant ultérieur à partir de ladite au moins une coordonnée du deuxième point de référence de corps de mesure (M2).

15. Procédé selon la revendication 14, dans lequel le deuxième point de référence de corps de mesure (M2) est positionné sur la coordonnée Y ou à proximité de la coordonnée Y de l'axe de rotation (D).
